(19) Europäisches Patentamt
European Patent Office
Office européen des brevets

(11) **EP 4 667 594 A1**

(12) **EUROPEAN PATENT APPLICATION**
published in accordance with Art. 153(4) EPC

(43) Date of publication:
**24.12.2025 Bulletin 2025/52**

(21) Application number: **24756943.7**

(22) Date of filing: **15.02.2024**

(51) International Patent Classification (IPC):
*C21D 8/12* (2006.01)    *B23K 26/364* (2014.01)

(52) Cooperative Patent Classification (CPC):
**B23K 26/364; B23K 26/0734; B23K 26/0736;
C21D 8/12**

(86) International application number:
**PCT/JP2024/005171**

(87) International publication number:
**WO 2024/172103 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.02.2023 JP 2023022958**

(71) Applicant: **NIPPON STEEL CORPORATION
Chiyoda-ku
Tokyo 100-8071 (JP)**

(72) Inventors:
• **SAKAI, Tatsuhiko
Tokyo 100-8071 (JP)**
• **HAMAMURA, Hideyuki
Tokyo 100-8071 (JP)**

(74) Representative: **Vossius & Partner
Patentanwälte Rechtsanwälte mbB
Siebertstrasse 3
81675 München (DE)**

(54) **GROOVING METHOD, GROOVING DEVICE, AND GRAIN-ORIENTED ELECTRICAL STEEL SHEET**

(57) The present groove processing method is a method for forming a groove on a grain-oriented electrical steel sheet, the method includes a groove processing step of performing scanning with a laser beam to form a groove having a linear shape and a maximum depth of 10 [$\mu$m] or more and 50 [$\mu$m] or less and extending in a scanning direction serving as a direction parallel to a width direction of the grain-oriented electrical steel sheet perpendicular to a rolling direction or a direction inclined at a predetermined angle with respect to the width direction, the grooves being formed at regular intervals or non-regular intervals in the rolling direction of the grain-oriented electrical steel sheet, the laser beam includes a central irradiation part serving as a region including a center of an optical path of the laser beam where the laser beam is emitted, and a peripheral irradiation part serving as a region surrounding the central irradiation part where the laser beam is emitted, and an energy density [$J/cm^2$] of the central irradiation part is set higher than an energy density [$J/cm^2$] of the peripheral irradiation part.

EP 4 667 594 A1

# FIG. 3

(3A)

(3B)

(3C)

(3D)

**Description**

TECHNICAL FIELD

The present invention relates to a groove processing method, a groove processing apparatus, and a grain-oriented electrical steel sheet.

Priority is claimed on Japanese Patent Application No. 2023-022958, filed February 16, 2023, the content of which is incorporated herein by reference.

BACKGROUND ART

As a measure for reducing iron loss in a grain-oriented electrical steel sheet used for an iron core of a transformer, a magnetic domain control process in which a sheet surface is scanned with a laser beam has been put into practical use (see, for example, Patent Document 1). In this magnetic domain control process, linear strains or linear grooves are formed on the sheet surface by scanning the steel sheet with a laser beam along a direction parallel to a direction perpendicular to a rolling direction (the width direction of the grain-oriented electrical steel sheet) at regular intervals in a sheet-passing direction (rolling direction) of the grain-oriented electrical steel sheet or a direction inclined at a predetermined angle with respect to the width direction.

Here, various techniques using laser processing are considered in order to reduce iron loss, and for example, a technique of applying the above-described "strains" disclosed in Patent Document 2 can be exemplified, and a technique of forming the above-described "grooves" disclosed in Patent Documents 3 and 4 can be exemplified.

In a case where the technique of applying "strains" and the technique of forming "grooves" are compared with each other, the latter that performs magnetic domain control by forming grooves on the sheet surface can exhibit excellent performance that the magnetic domain control effect is not lost even though stress relieving annealing is performed after the iron core is formed using the groove processed grain-oriented electrical steel sheet. In addition, since the grooves are formed on the sheet surface, there is also an advantage that it is possible to easily and clearly identify the steel sheet in which the magnetic domain control is being performed. In consideration of this advantage, hereinafter, the description will be made focusing on the technique of forming a "groove" and performing magnetic domain control.

In a laser processing method for forming a groove by irradiating a surface of a grain-oriented electrical steel sheet with a laser beam, the surface of the grain-oriented electrical steel sheet is instantaneously melted and evaporated by local thermal processing with the laser beam to form a groove having a depth of, for example, about 20 to 30 $\mu$m. A molten material remaining without being evaporated and scattered may be pushed out to the sheet surface, and solidified, or molten droplets (spatter) may adhere to the periphery of the groove, and the molten material may remain as upheavals on the sheet surface.

In a case where an iron core of a transformer is manufactured by stacking such grain-oriented electrical steel sheets, a certain pressure (also referred to as an interlayer pressure) is generated between the stacked grain-oriented electrical steel sheets. In a case where upheavals are present on the sheet surface during stacking, local strains occur in the grain-oriented electrical steel sheets due to the interlayer pressure, thereby causing an increase in iron loss. In addition, the upheavals may be a factor causing electrical insulation breakdown between the grain-oriented electrical steel sheets. Therefore, in the magnetic domain control process for processing grooves on a grain-oriented electrical steel sheet by a laser beam, it is necessary to minimize the formation of the upheavals.

For example, Patent Document 3 discloses a method for forming a groove on a sheet surface using a continuous-wave laser beam, in which the height of an upheaval is controlled to 5 [$\mu$m] or less through the specification of an irradiation condition of the laser beam, and discloses, as an example, the use of a laser having an intensity profile of the laser beam in the basic Gaussian mode. In addition, Patent Document 4 discloses that upheavals are removed by a brush roll after grooves are processed by a laser.

Citation List

Patent Document

Patent Document 1: Japanese Unexamined Patent Application, First Publication No. H6-57335
Patent Document 2: PCT International Publication No. WO 2022/045265
Patent Document 3: Japanese Patent No. 5234222
Patent Document 4: Japanese Patent No. 6826606

SUMMARY OF INVENTION

Technical Problem

However, as disclosed in Patent Document 3, even though the irradiation condition of the laser beam is specified, it is difficult to completely prevent the upheavals from being formed. In addition, although it is possible to remove the upheavals with a brush roll or the like after processing, additional equipment is required in such a case. Therefore, in a magnetic domain control technique for reducing iron loss by irradiating a surface of a grain-oriented electrical steel sheet with a laser beam to form a groove having a depth of, for example, 20 $\mu$m or more, it is desired to reduce iron loss without forming an upheaval on the sheet surface around the groove.

An object of the present invention is to provide a groove processing method, a groove processing apparatus, and a grain-oriented electrical steel sheet, which enable the reduction of iron loss, without forming an upheaval around a groove, as compared to the conventional technique.

Solution to Problem

The present invention has been made in view of the above circumstances, and adopts the following aspects.

A groove processing method according to one aspect of the present invention is a groove processing method for forming a groove on a grain-oriented electrical steel sheet, and the method includes a groove processing step of performing scanning with a laser beam to form a groove having a linear shape and a maximum depth of 10 [$\mu$m] or more and 50 [$\mu$m] or less and extending in a scanning direction serving as a direction parallel to a width direction of the grain-oriented electrical steel sheet perpendicular to a rolling direction or a direction inclined at a predetermined angle with respect to the width direction, the grooves being formed at regular intervals in the rolling direction of the grain-oriented electrical steel sheet, in which the laser beam includes a central irradiation part serving as a region including a center of an optical path of the laser beam where the laser beam is emitted, and a peripheral irradiation part serving as a region surrounding the central irradiation part where the laser beam is emitted, and an energy density [J/cm$^2$] of the central irradiation part is set higher than an energy density [J/cm$^2$] of the peripheral irradiation part.

A groove processing method according to another aspect of the present invention is a groove processing method for forming a groove on a grain-oriented electrical steel sheet, and the method includes a groove processing step of performing scanning with a laser beam to form a groove having a linear shape and a maximum depth of 10 [$\mu$m] or more and 50 [$\mu$m] or less and extending in a scanning direction serving as a direction parallel to a width direction of the grain-oriented electrical steel sheet perpendicular to a rolling direction or a direction inclined at a predetermined angle with respect to the width direction, the grooves being formed at non-regular intervals in the rolling direction of the grain-oriented electrical steel sheet, in which the laser beam includes a central irradiation part serving as a region including a center of an optical path of the laser beam where the laser beam is emitted, and a peripheral irradiation part serving as a region surrounding the central irradiation part where the laser beam is emitted, and an energy density [J/cm$^2$] of the central irradiation part is set higher than an energy density [J/cm$^2$] of the peripheral irradiation part.

In addition, a groove processing apparatus according to one aspect of the present invention is a groove processing apparatus configured to form a groove on a grain-oriented electrical steel sheet, in which the groove processing apparatus performs scanning with a laser beam to form a groove having a linear shape and a maximum depth of 10 [$\mu$m] or more and 50 [$\mu$m] or less and extending in a scanning direction serving as a direction parallel to a width direction of the grain-oriented electrical steel sheet perpendicular to a rolling direction or a direction inclined at a predetermined angle with respect to the width direction, the grooves being formed at regular intervals in the rolling direction of the grain-oriented electrical steel sheet, the laser beam includes a central irradiation part serving as a region including a center of an optical path of the laser beam where the laser beam is emitted, and a peripheral irradiation part serving as a region surrounding the central irradiation part where the laser beam is emitted, and an energy density [J/cm$^2$] of the central irradiation part is set higher than an energy density [J/cm$^2$] of the peripheral irradiation part.

In addition, a groove processing apparatus according to another aspect of the present invention is a groove processing apparatus configured to form a groove on a grain-oriented electrical steel sheet, in which the groove processing apparatus performs scanning with a laser beam to form a groove having a linear shape and a maximum depth of 10 [$\mu$m] or more and 50 [$\mu$m] or less and extending in a scanning direction serving as a direction parallel to a width direction of the grain-oriented electrical steel sheet perpendicular to a rolling direction or a direction inclined at a predetermined angle with respect to the width direction, the grooves being formed at non-regular intervals in the rolling direction of the grain-oriented electrical steel sheet, the laser beam includes a central irradiation part serving as a region including a center of an optical path of the laser beam where the laser beam is emitted, and a peripheral irradiation part serving as a region surrounding the central irradiation part where the laser beam is emitted, and an energy density [J/cm$^2$] of the central irradiation part is set higher than an energy density [J/cm$^2$] of the peripheral irradiation part.

Furthermore, a grain-oriented electrical steel sheet according to one aspect of the present invention is a grain-oriented electrical steel sheet, in which a groove having a linear shape and a maximum depth of 10 [μm] or more and 50 [μm] or less and extending in a direction parallel to a width direction perpendicular to a rolling direction or a direction inclined at a predetermined angle with respect to the width direction is formed, the grooves being formed at regular intervals in the rolling direction, and the groove has a multistage shape including a deep groove portion with a deepest point and a groove edge portion with a gradient gentler than a gradient of a wall surface of the deep groove portion as viewed in the direction in which the groove extends.

Furthermore, a grain-oriented electrical steel sheet according to another aspect of the present invention is a grain-oriented electrical steel sheet, in which a groove having a linear shape and a maximum depth of 10 [μm] or more and 50 [μm] or less and extending in a direction parallel to a width direction perpendicular to a rolling direction or a direction inclined at a predetermined angle with respect to the width direction is formed, the grooves being formed at non-regular intervals in the rolling direction, and the groove has a multistage shape including a deep groove portion with a deepest point and a groove edge portion with a gradient gentler than a gradient of a wall surface of the deep groove portion as viewed in the direction in which the groove extends.

Advantageous Effects of Invention

According to each of the above-described aspects of the present invention, when it is intended to minimize the iron loss of the grain-oriented electrical steel sheet by forming the groove using the laser beam, it is possible to minimize an upheaval around the groove as compared to the conventional technique and to reduce the iron loss.

BRIEF DESCRIPTION OF DRAWINGS

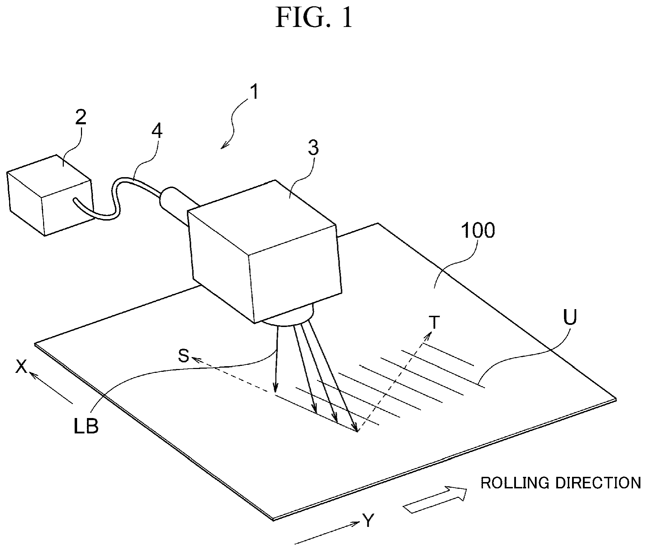

[FIG. 1] A perspective view showing a constitution of a groove processing apparatus according to one embodiment of the present invention.

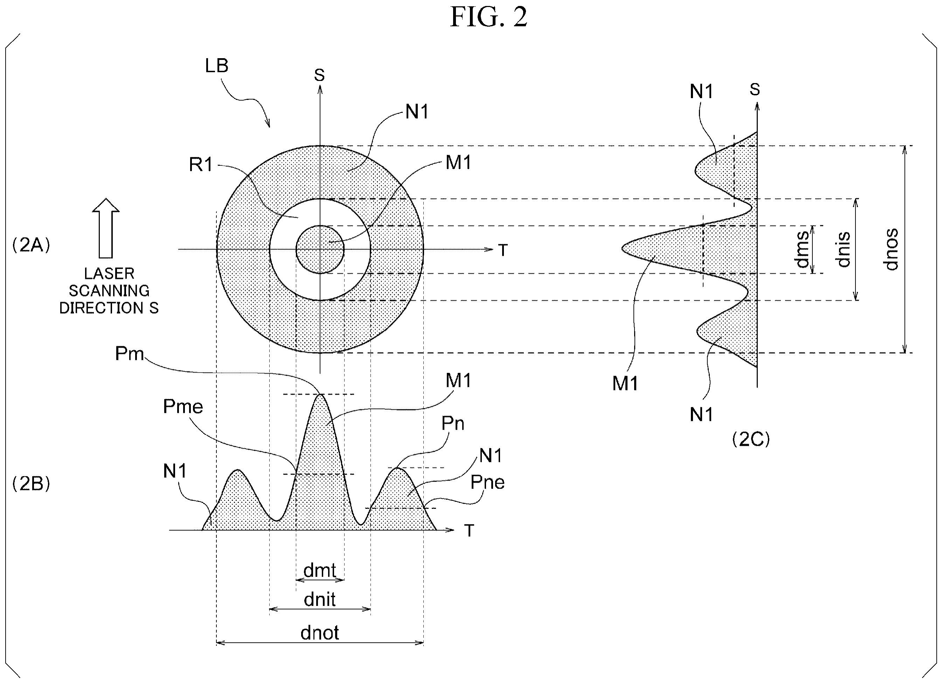

[FIG. 2] A schematic diagram showing a focused shape of a laser beam emitted from the groove processing apparatus. Here, (2A) shows a top view with respect to a sheet surface, (2B) shows a focused shape of the laser beam when (2A) is viewed in a cross section along a T direction, and (2C) shows a focused shape of the laser beam when (2A) is viewed in a cross section along the S direction.

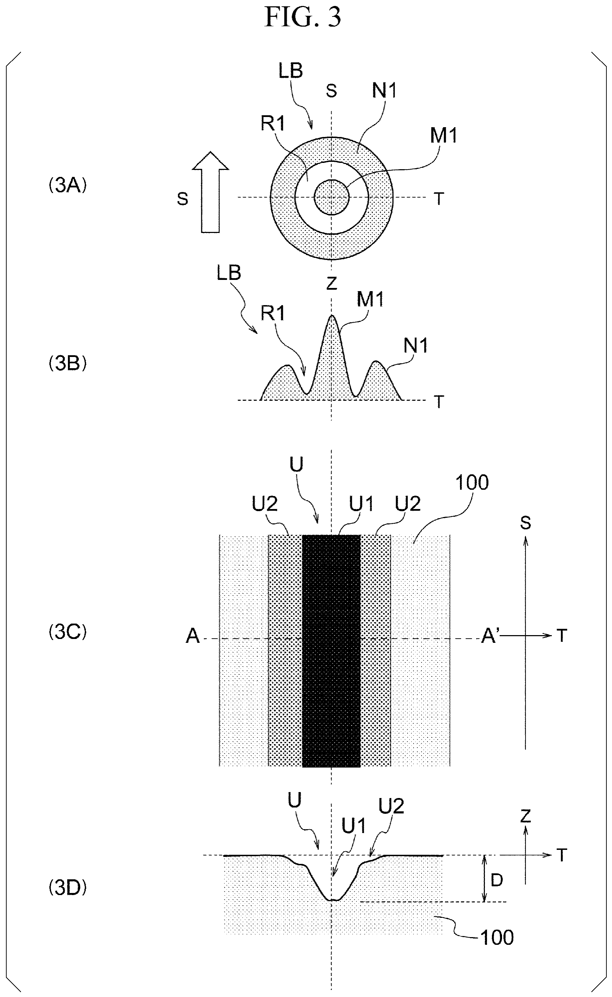

[FIG. 3] A schematic diagram showing a relationship between a focused shape of a laser beam emitted from the groove processing apparatus and a groove formed by this laser beam. Here, (3A) shows a focused shape of the laser beam when viewed from the top with respect to a sheet surface, and (3B) shows a focused shape of the laser beam when (3A) is viewed in a cross section along a T direction. In addition, (3C) is a plan view of a groove formed on the sheet surface, and (3D) is a longitudinal cross-sectional view of (3C) as viewed along line A-A'.

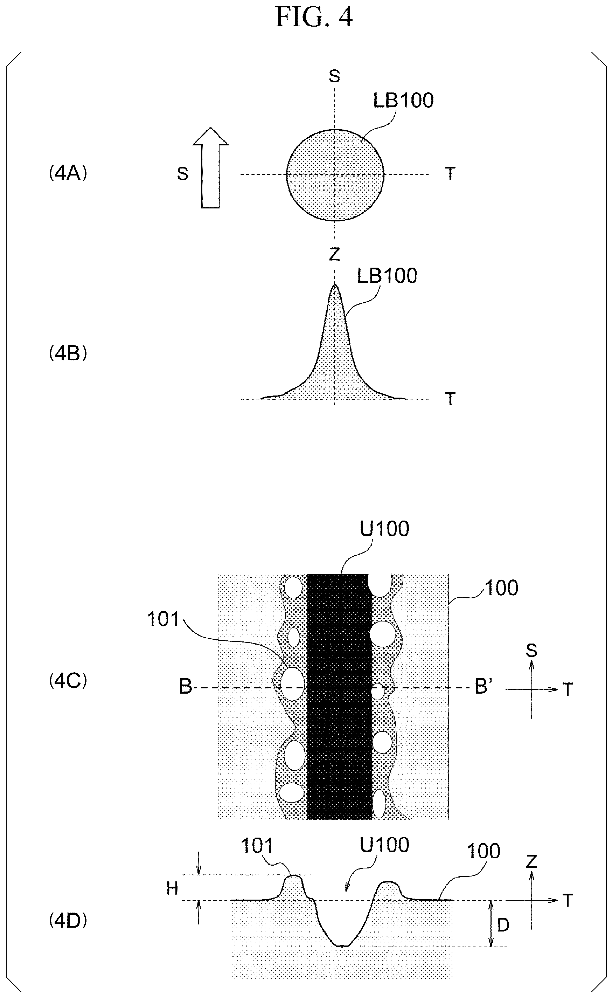

[FIG. 4] A schematic diagram showing a relationship between a focused shape of a conventional laser beam and a groove formed by the conventional laser beam. Here, (4A) shows a focused shape of the laser beam when viewed from the top with respect to a sheet surface, and (4B) shows a focused shape of the laser beam when (4A) is viewed in a cross section along a T direction. In addition, (4C) is a plan view of the groove formed on the sheet surface, and (4D) is a longitudinal cross-sectional view of (4C) as viewed along line B-B'.

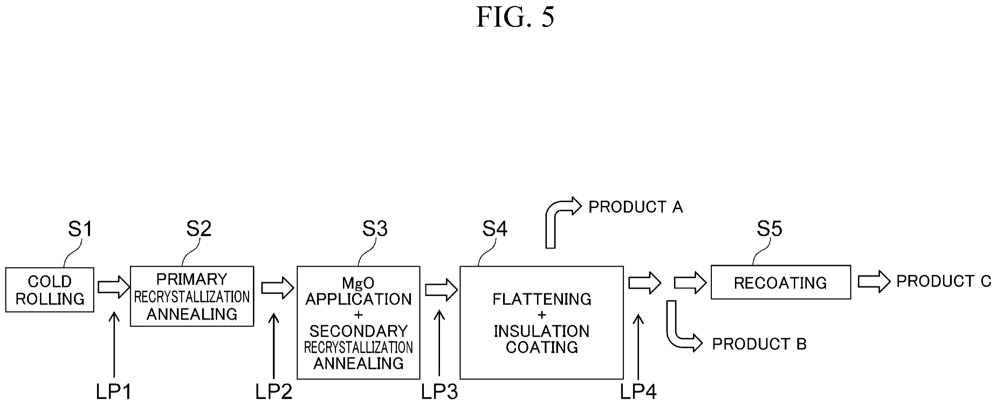

[FIG. 5] A schematic diagram showing individual production steps after a grain-oriented electrical steel sheet in the embodiment is subjected to a cold rolling step.

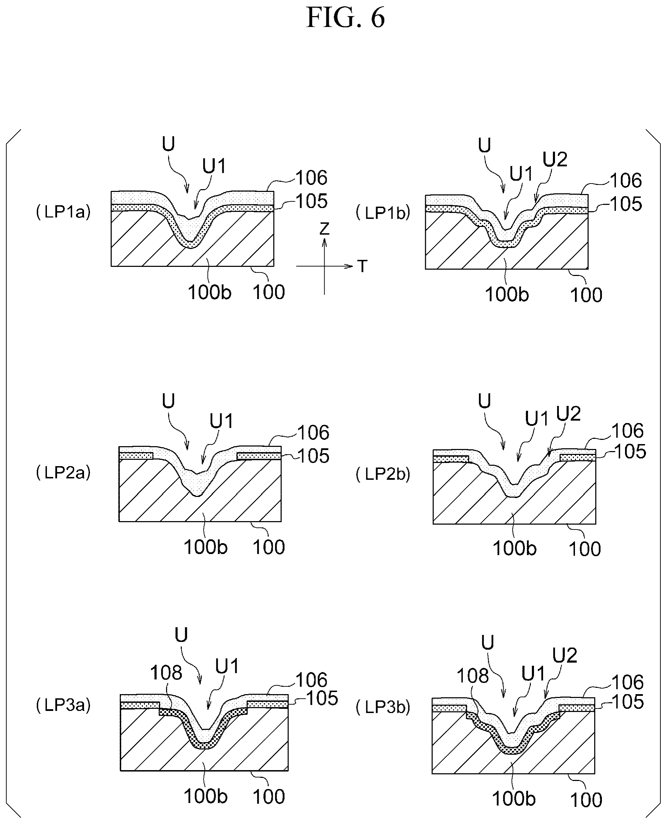

[FIG. 6] Cross-sectional views of a product in which a groove is processed using the groove processing apparatus according to the embodiment. Here, (LP1a) and (LP1b) are cross-sectional views showing a cross-sectional constitution of a product A subjected to a laser processing step LP1 after the cold rolling step in step S1 shown in FIG. 5. In addition, (LP2a) and (LP2b) are cross-sectional views showing a cross-sectional constitution of the product A subjected to a laser processing step LP2 after a primary recrystallization annealing step in step S2 shown in FIG. 5. Furthermore, (LP3a) and (LP3b) are cross-sectional views showing a cross-sectional constitution of the product A subjected to a laser processing step LP3 after a secondary recrystallization annealing step in step S3 shown in FIG. 5.

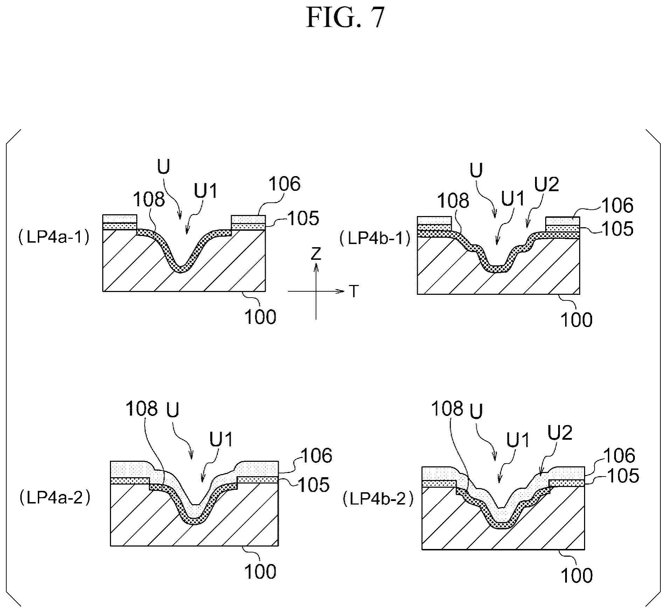

[FIG. 7] Cross-sectional views of a product in which a groove is processed using the groove processing apparatus according to the embodiment. Here, (LP4a-1) and (LP4b-1) are cross-sectional views showing a cross-sectional constitution of a product B subjected to a laser processing step LP4 after an insulation coating step in step S4 shown in FIG. 5. In addition, (LP4a-2) and (LP4b-2) are cross-sectional views showing a cross-sectional constitution of a product C subjected to the laser processing step LP4 after the insulation coating step in step S4 shown in FIG. 5, and further subjected to a recoating step.

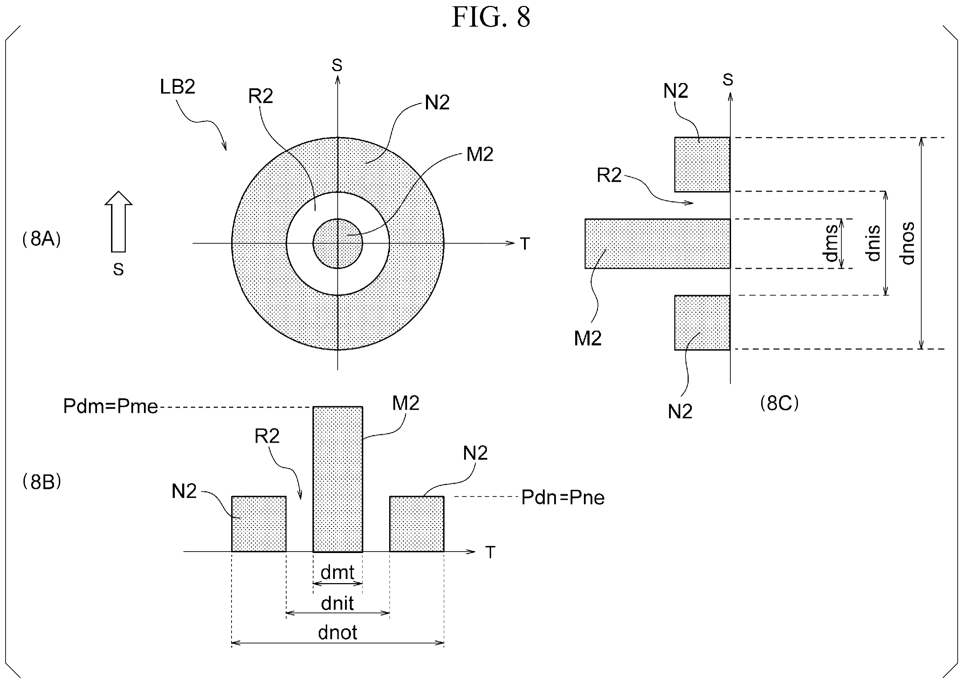

[FIG. 8] A schematic diagram showing a constitution of a laser beam according to another embodiment of the present invention. Here, (8A) shows a view when viewed from the top with respect to a sheet surface, (8B) shows a view of (8A) when viewed in a cross section along a T direction, and (8C) shows a view of (8A) when viewed in a cross section along the S direction.

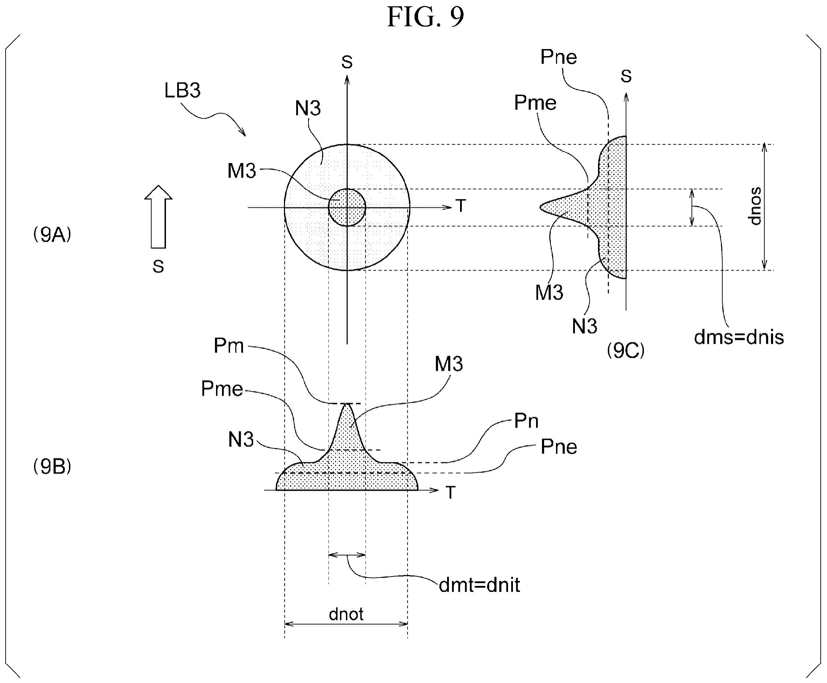

[FIG. 9] A schematic diagram showing a constitution of a laser beam according to still another embodiment of the present invention. Here, (9A) shows a view when viewed from the top with respect to a sheet surface, (9B) shows a view of (9A) when viewed in a cross section along a T direction, and (9C) shows a view of (9A) when viewed in a cross section along the S direction.

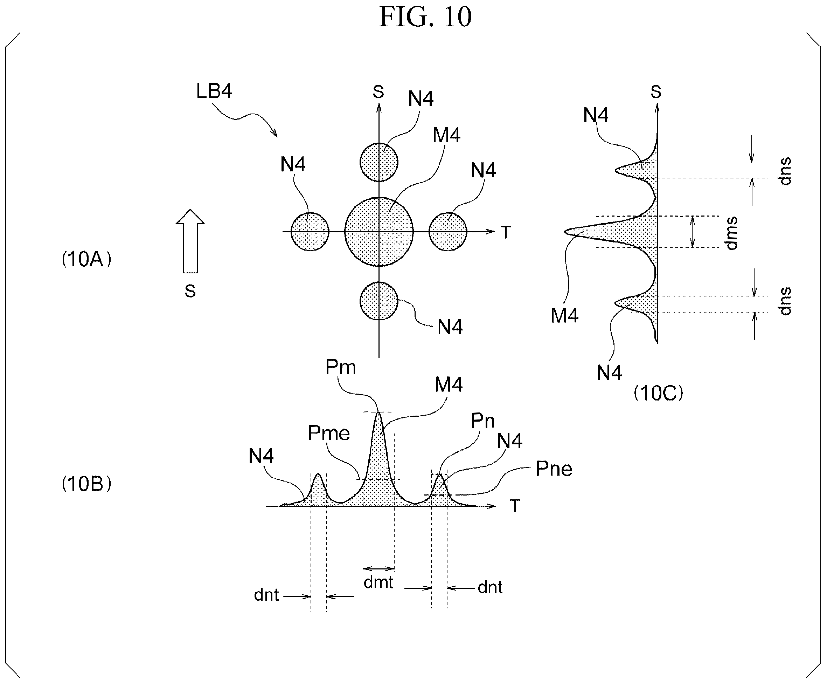

[FIG. 10] A schematic diagram showing a constitution of a laser beam according to yet still another embodiment of the present invention. Here, (10A) shows a view when viewed from the top with respect to a sheet surface, (10B) shows a view of (10A) when viewed in a cross section along a T direction, and (10C) shows a view of (10A) when viewed in a cross section along the S direction.

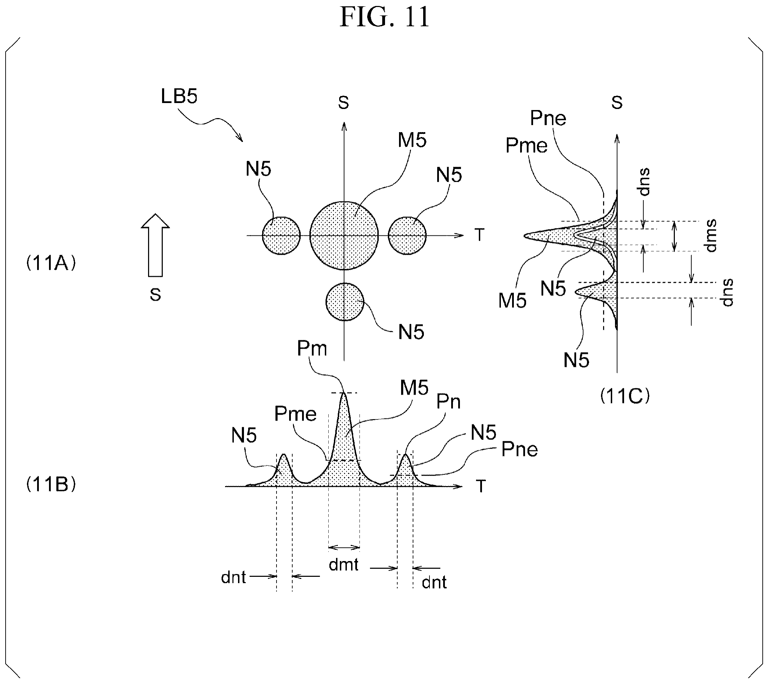

[FIG. 11] A schematic diagram showing a constitution of a laser beam according to yet still another embodiment of the present invention. Here, (11A) shows a view when viewed from the top with respect to a sheet surface, (11B) shows a view of (11A) when viewed in a cross section along a T direction, and (11C) shows a view of (11A) when viewed in a cross section along the S direction.

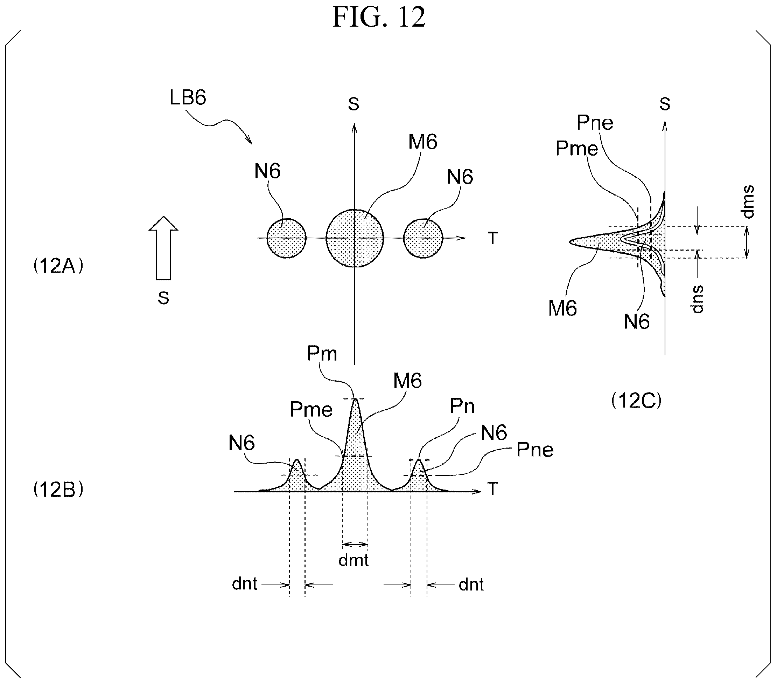

[FIG. 12] A schematic diagram showing a constitution of a laser beam according to yet still another embodiment of the present invention. Here, (12A) shows a view when viewed from the top with respect to a sheet surface, (12B) shows a view of (12A) when viewed in a cross section along a T direction, and (12C) shows a view of (12A) when viewed in a cross section along the S direction.

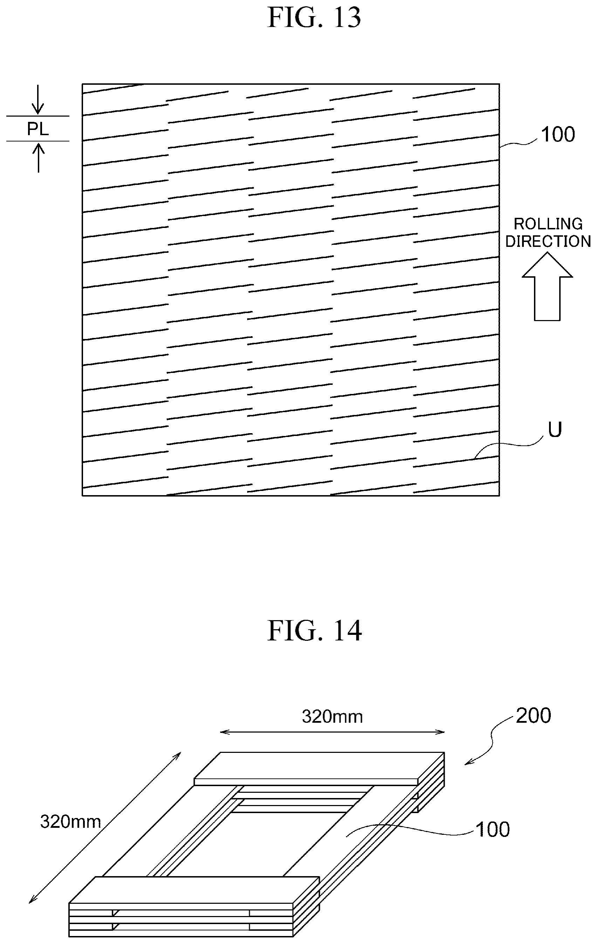

[FIG. 13] A schematic diagram showing a sheet surface of a grain-oriented electrical steel sheet in which a plurality of grooves are formed by a laser beam in a verification test.

[FIG. 14] A perspective view showing a constitution of a simulated transformer used in the verification test.

DESCRIPTION OF EMBODIMENTS

Hereinafter, embodiments and various modification examples of the present invention will be described in detail with reference to the drawings. In the following description, the same components are denoted by the same reference numerals, and redundant description will be omitted.

(1) <Constitution of Groove Processing Apparatus According to Present Embodiment>

FIG. 1 is a perspective view showing a constitution of a groove processing apparatus 1 according to the present embodiment. The groove processing apparatus 1 irradiates a surface (hereinafter, may be referred to as a "sheet surface") of a grain-oriented electrical steel sheet 100 that is an object to be processed with a laser beam LB to form a groove U extending in a direction parallel to a width direction of the grain-oriented electrical steel sheet 100 or a direction inclined at a predetermined angle with respect to the width direction, the grooves U being formed at regular intervals or non-regular intervals along a rolling direction. A position of the groove processing apparatus 1 with respect to the grain-oriented electrical steel sheet 100 is set based on, for example, a length and a position of the groove U formed on the sheet surface. The grain-oriented electrical steel sheet 100 is passed in the rolling direction by a sheet passing device (not shown).

In FIG. 1, a Y direction is a rolling direction of the grain-oriented electrical steel sheet 100, an X direction is a width direction of the grain-oriented electrical steel sheet 100, and an S direction is a scanning direction (hereinafter, may also be referred to as a laser scanning direction S or simply a scanning direction S) of the laser beam LB for forming the groove U. A T direction is a direction perpendicular to the laser scanning direction S on the sheet surface, and is also a width direction (groove width direction) of the groove U. Note that the laser scanning direction S (S direction) and an extending direction of the groove U (also referred to as a groove extending direction S) are the same direction. In addition, in the following description, an X axis, a Y axis, an S axis, and a T axis mean axes that pass through the center (that is, the center of a central irradiation part) of an optical path of the laser beam LB condensed on the sheet surface of the grain-oriented electrical steel sheet 100 and are parallel to the X direction, the Y direction, the S direction, and the T direction, respectively.

The groove processing apparatus 1 includes a laser oscillator 2 and a laser irradiation device 3. The laser irradiation device 3 includes a collimator, a polygon mirror, a condenser lens, and the like therein. The laser oscillator 2 outputs a laser beam emitted by a predetermined irradiation method (for example, a continuous irradiation method or a pulsed irradiation method) to the laser irradiation device 3 via an optical fiber cable 4 having a double structure including a center core and a peripheral core. Since the optical fiber cable 4 has the double structure including the center core and the peripheral core, the optical fiber cable 4 transmits a laser beam including a central irradiation part and a peripheral irradiation part described later to the laser irradiation device 3.

The laser oscillator 2 includes a power division adjustment device therein, and during scanning of the laser beam LB, the laser power of the laser beam transmitted to each of the center core and the peripheral core of the optical fiber cable 4 is adjusted by the power division adjustment device. Thus, the laser beam LB having different energy densities at the central irradiation part and the peripheral irradiation part is generated.

For example, the laser irradiation device 3 transforms a divergent beam output from the optical fiber cable 4 into a collimated beam having an appropriate diameter, and irradiates the polygon mirror with the transformed laser beam. The laser irradiation device 3 rotates the polygon mirror incorporated therein to change an angle of the polygon mirror with respect to the emitted laser beam, thereby changing a traveling direction of the laser beam reflected by the polygon mirror. Thus, the laser beam LB is scanned along the scanning direction S that is a direction parallel to the width direction of the grain-oriented electrical steel sheet 100 or a direction inclined at a predetermined angle with respect to the width direction.

The scanned laser beam LB is condensed on the sheet surface by, for example, an fθ lens incorporated in the laser irradiation device 3. As a result, the laser beam LB is condensed and focused on the sheet surface of the grain-oriented electrical steel sheet 100 and scanned in the S direction, with energy density increased, so that the groove U is formed on the sheet surface of the grain-oriented electrical steel sheet 100.

In a case where the groove U is formed on the sheet surface of the grain-oriented electrical steel sheet 100 by the laser beam LB to reduce the iron loss of the grain-oriented electrical steel sheet 100, forming the groove U extending parallel to the width direction of the grain-oriented electrical steel sheet 100 maximizes the reduction efficiency of the iron loss. However, for example, in a case where the grain-oriented electrical steel sheet 100 is used for an iron core of a transformer or the like, the grain-oriented electrical steel sheet 100 is subjected to a folding step, and the grain-oriented electrical steel sheet 100 is more likely to be fractured starting from the groove U parallel to the width direction during the folding step when the extending direction of the groove U is parallel to the width direction of the grain-oriented electrical steel sheet 100. Therefore, the direction of the groove U (that is, the scanning direction S) may be slightly inclined from the direction parallel to the width direction by allowing a slight decrease in the reduction efficiency. Note that, in a case where the direction (that is, the scanning direction S) of the groove U is inclined with respect to the width direction, the groove U may be inclined by appropriately determining an angle according to the required performance of the iron loss or the like, and for example, from the viewpoint of sufficiently securing the reduction amount of the iron loss, it is conceivable to incline the groove U within a range of more than 0° and 30° or less with respect to the width direction of the grain-oriented electrical steel sheet 100.

In this case, the groove processing apparatus 1 scans the surface of the grain-oriented electrical steel sheet 100 with the laser beam LB to form a plurality of grooves U, each having a linear shape and a maximum depth of 10 [μm] or more and 50 [μm] or less, and extending in the scanning direction S parallel to the width direction of the grain-oriented electrical steel sheet 100 perpendicular to the rolling direction or inclined at a predetermined angle with respect to the width direction, the plurality of grooves U being formed at regular intervals in the rolling direction of the grain-oriented electrical steel sheet 100. Note that, as necessary, the intervals at which the grooves U are formed can be changed to non-regular intervals along the rolling direction of the grain-oriented electrical steel sheet 100.

(2) <Constitution of Laser Beam According to Present Embodiment>

FIG. 2 is a schematic diagram showing a constitution of a focused shape of the laser beam LB according to the present embodiment. (2A) of FIG. 2 is a schematic diagram showing a focused shape of the laser beam LB emitted from the laser irradiation device 3 toward the grain-oriented electrical steel sheet 100. (2B) of FIG. 2 is a schematic diagram showing an intensity profile of the laser beam LB on the surface of the grain-oriented electrical steel sheet 100 on the T axis, that is, a spatial distribution of the power [W] for the focused shape shown in (2A) of FIG. 2. In addition, (2C) of FIG. 2 is a schematic diagram showing a spatial distribution of the power [W] of the laser beam LB on the surface of the grain-oriented electrical steel sheet 100 on the S axis.

As shown in (2A) of FIG. 2, the power distribution of the laser beam LB has a circular shape on the ST plane (the sheet surface including both the S direction and the T direction), and specifically, includes a central irradiation part M1 serving as a region including the center of an optical path of the laser beam LB, and a peripheral irradiation part N1 formed in an annular shape around the central irradiation part M1 so as to surround the central irradiation part M1. Furthermore, the power distribution of the laser beam LB includes a non-irradiation part R1 between the central irradiation part M1 and the peripheral irradiation part N1, the non-irradiation part R1 serving as a region where the power is relatively small and can be regarded as substantially no irradiation with the laser beam LB.

As shown in (2B) of FIG. 2, the power distribution of the central irradiation part M1 is a Gaussian like distribution in which a maximum power Pm [W] is achieved at a position corresponding to the center of an optical path of the laser beam LB, where the power is the highest, and the beam intensity profile attenuates in a radial direction outward from the position of the maximum power Pm [W]. The power distribution of the peripheral irradiation part N1 is a Gaussian like distribution in which a maximum power Pn [W] is achieved at a position of the center portion (central diameter) in a width direction of an annular ring between the inner circumferential portion and the outer circumferential portion within the annular shape portion, where the power is the highest, and the power attenuates from the position of the maximum power Pn [W] toward the inner circumferential portion and the outer circumferential portion. Note that the "Gaussian like distribution" indicates a crest-shaped power distribution in which the power [W] gradually decreases as the distance from the center where the power [W] of the laser beam LB reaches its absolute maximum value increases. This "Gaussian like distribution" includes both a Gaussian distribution defined by a mathematical formula and a crest-shaped distribution that cannot be represented by a mathematical formula.

Note that (2B) of FIG. 2 shows diameters of the central irradiation part M1 and the peripheral irradiation part N1 along a T axis direction. The diameter of the central irradiation part M1 in the T axis direction is defined by a position on the T axis where the central irradiation part M1 reaches $1/e^2$ times the maximum power Pm. In addition, the inner diameter and the outer diameter of the peripheral irradiation part N1 in the T axis direction are defined by a position on the T axis where the peripheral irradiation part N1 reaches $1/e^2$ times the maximum power Pn. In (2B) of FIG. 2, $1/e^2$ times the maximum power Pm of the central irradiation part M1 is denoted by Pme, and the diameter of the central irradiation part M1 in the T axis direction is denoted by dmt [cm]. $1/e^2$ times the maximum power Pn of the annular peripheral irradiation part N1 is denoted by Pne, the diameter of the inner circumferential portion of the peripheral irradiation part N1 in the T axis direction is denoted by dnit [cm], and the diameter of the outer circumferential portion is denoted by dnot [cm]. In addition, an annular range from the diameter dmt of the central irradiation part M1 to the diameter dnit of the inner circumferential portion of the peripheral irradiation part N1 is the non-irradiation part R1 that can be regarded as not being substantially irradiated with the laser beam LB because the power of the laser beam LB is small.

(2C) of FIG. 2 shows diameters of the central irradiation part M1 and the peripheral irradiation part N1 along an S axis direction. Similarly to the T axis direction, the diameter of the central irradiation part M1 in the S axis direction is defined based on a position on the S axis direction where the central irradiation part M1 reaches $1/e^2$ times the maximum power Pm. In addition, similarly to the T axis direction, the inner diameter and the outer diameter of the peripheral irradiation part N1 are also defined based on a position on the S axis direction where the peripheral irradiation part N1 reaches $1/e^2$ times the maximum power Pn. The diameter of the central irradiation part M1 in the T axis direction is denoted by dms[cm]. The diameter of the inner circumferential portion of the annular peripheral irradiation part N1 in the S axis direction is denoted by dnis [cm], and the diameter of the outer circumferential portion is denoted by dnos [cm]. In addition, an annular range from the diameter dms of the central irradiation part M1 to the diameter dnis of the inner circumferential portion of the peripheral irradiation part N1 is the non-irradiation part R1 in the S axis direction.

In a case where metal processing (formation of the groove U on the steel sheet) is performed by scanning with the laser beam LB, phenomena leading to an increase in temperature, melting, and evaporation of the metal mainly depend on the energy density of the emitted laser beam LB. The energy density is the product of the power density of the emitted laser beam LB and the irradiation time. The power density is defined by a value obtained by dividing the maximum powers Pm and Pn of the central irradiation part M1 and the peripheral irradiation part N1 by an area of the laser beam LB.

In the present embodiment shown in FIG. 2, a power density Pdm [MW/cm$^2$] of the central irradiation part M1 and a power density Pdn [MW/cm$^2$] of the peripheral irradiation part N1 can be represented by (Equation 1) and (Equation 2), respectively. The power density Pdm of the central irradiation part M1 can exemplify a range of 5.0 [MW/cm$^2$] or more and 600 [MW/cm$^2$] or less. In addition, the power density Pdn of the peripheral irradiation part N1 can exemplify a range of 1.0 [MW/cm$^2$] or more and less than 5.0 [MW/cm$^2$].

$$Pdm = Pm/(\pi/4 \times dmt \times dms) \cdots (\text{Equation 1})$$

$$Pdn = Pn/(\pi/4 \times (dnot \times dnos - dnit \times dnis)) \cdots (\text{Equation 2})$$

The irradiation time when the scanning with the laser beam LB is performed is a value obtained by dividing the diameter of the laser beam LB in the scanning direction S by a scanning rate Vs [cm/s]. In the present embodiment, irradiation times Tm [s] and Tn [s] of the central irradiation part M1 and the peripheral irradiation part N1 can be represented by (Equation 3) and (Equation 4), respectively.

$$Tm = dms/Vs \cdots (\text{Equation 3})$$

$$Tn = 2 \times (dnos - dnis)/Vs \cdots (\text{Equation 4})$$

Therefore, an energy density Edm [J/cm$^2$] of the central irradiation part M1 and an energy density Edn [J/cm$^2$] of the peripheral irradiation part N1 can be represented by (Equation 5) and (Equation 6), respectively.

$$Edm = Pdm \times Tm \cdots (\text{Equation 5})$$

$$Edn = Pdn \times Tn \cdots (\text{Equation 6})$$

Although FIG. 2 shows an example in which the central irradiation part M1 has a perfect circular shape and the peripheral irradiation part N1 has a perfect annular shape, the present invention is not limited to this example. In a case where the central irradiation part M1 is elliptical and the peripheral irradiation part N1 has an elliptical ring shape, that is, dmt and dms may be different from each other, or dnit and dnis, and dnot and dnos may be different from each other.

In the present embodiment, the groove U is formed on the grain-oriented electrical steel sheet 100 by the central irradiation part M1 by scanning with the laser beam LB. However, in a case where scanning is performed with a laser beam including only the central irradiation part M1, the irradiated portion on the grain-oriented electrical steel sheet 100 is melted and evaporated due to the relatively large energy density Edm. The molten metal is pushed up around the groove U by the high-pressure metal vapor generated at this time, so that the molten metal is raised from the surface of the grain-oriented electrical steel sheet 100, and then solidified by rapid cooling to remain as an upheaval. On the other hand, in the present embodiment, scanning is performed within not only the central irradiation part M1 but also the peripheral irradiation part N1 at once. Therefore, the molten metal pushed up around the groove U is immediately heated due to the peripheral irradiation part N1. Thus, the cooling rate of the molten metal is slowed down or the temperature of the molten metal is maintained at a high temperature, so that the viscosity of the molten metal decreases and the fluidity increases. As a result, the molten metal is flattened before solidification or flows toward the deep portion of the groove U, so that no upheaval is formed on the sheet surface.

It is desirable to set the energy density Edn of the peripheral irradiation part N1 lower than the energy density Edm of the central irradiation part M1. More specifically, the surface of the grain-oriented electrical steel sheet 100 is locally melted and evaporated by the central irradiation part M1 to form the groove U, but in order to form the groove U having a depth of 10 [$\mu$m] or more necessary for obtaining the reduction effect of iron loss by magnetic domain control, the energy density Edm of the central irradiation part M1 is preferably, for example, 50 [$J/cm^2$] or more. On the other hand, in a case where the energy density Edm of the central irradiation part M1 is more than 1000 [$J/cm^2$] to be excessively large, a deep groove having a depth of more than 50 [$\mu$m] is formed, resulting in significant inhibition in the generation of the magnetic flux density, which is an important performance of the electrical steel sheet, and in a decrease in the reduction of iron loss. Therefore, the energy density Edm of the central irradiation part M1 is desirably 1000 [$J/cm^2$] or less. In addition, the peripheral irradiation part N1 requires an appropriate energy density Edn in order to obtain a metal heating effect, and a specific numerical value thereof is preferably, for example, 1 [$J/cm^2$] or more. In contrast, in a case where the energy density Edn is too large, the molten metal may greatly increase, and the formation of upheavals is rather promoted instead, so that the energy density Edn is desirably, for example, less than 50 [$J/cm^2$]. For the above-described reason, the range of the energy density of the central irradiation part M1 can be exemplified as 50 [$J/cm^2$] or more and 1000 [$J/cm^2$] or less, and the range of the energy density of the peripheral irradiation part N1 can be exemplified as 1 [$J/cm^2$] or more and less than 50 [$J/cm^2$].

When the energy density Edm of the central irradiation part M1 and the energy density Edn of the peripheral irradiation part N1 satisfy the above ranges, favorable processing can be performed, and furthermore, the ratio between Edm and Edn may be set as follows with these ranges satisfied. That is, a ratio obtained by dividing the energy density Edn of the peripheral irradiation part N1 by the energy density Edm of central irradiation part M1 may be set within a range of 0.1 to 0.3. Here, in a case where the ratio is less than the lower limit value, the heating effect of the peripheral portion is relatively small with respect to the melting amount generated in the central irradiation part, and the effect of minimizing molten upheavals may be insufficient. In contrast, in a case where the ratio is more than the lower limit value of the ratio, the reduction effect of iron loss may decrease. This is considered to be because a recessed part having a depth equivalent to the groove depth of the central part is also formed in the peripheral irradiation part, and a wide groove is formed. For this reason, the ratio of Edn/Edm is preferably set within the above-described range. In this regard, the ratio of Edn/Edm set herein is an example, it is sufficient that each of the energy densities Edm and Edn satisfies the above-described range, and it is not necessary to set Edn/Edm to 0.1 to 0.3.

The laser irradiation device 3 irradiates the sheet surface of the grain-oriented electrical steel sheet 100 with the laser beam LB having a multi-stage beam intensity profile including the central irradiation part M1 and the peripheral irradiation part N1, the laser beam LB being input using, for example, a fiber transmission type laser having an annular refractive-index distribution. Note that, in the present embodiment, for example, a case where a laser beam is transmitted and emitted from the laser irradiation device 3 using the optical fiber cable 4 including a center core having a propagation core diameter of a Gaussian like beam and further including a transmission core concentric around the center core. However, the present invention is not limited to this example, and the laser irradiation device 3 may emit the laser beam LB including the central irradiation part M1 and the peripheral irradiation part N1 described above by combining two fiber transmission type lasers having different beam intensity profiles using a coaxial coupling optical system.

Next, the groove U formed on the sheet surface of the grain-oriented electrical steel sheet 100 by irradiation with the laser beam LB according to the present embodiment will be described. FIG. 3 shows a relationship between a focused shape of the laser beam LB and the groove U formed by the laser beam LB in the present embodiment. More specifically, (3A) of FIG. 3 shows a focused shape when the laser beam LB according to the present embodiment is viewed in a cross section perpendicular to an optical axis. (3B) of FIG. 3 shows a beam intensity profile of the laser beam LB shown in (3A) of FIG. 3 along the T axis direction on the sheet surface of the grain-oriented electrical steel sheet 100. (3C) of FIG. 3 shows the groove U as viewed from the vertical direction when the groove U is formed by irradiation with the laser beam LB according to the present embodiment. (3D) of FIG. 3 shows a cross-sectional shape when the groove U shown in (3C) of FIG. 3 is viewed in a cross section along the groove width direction (T direction).

The focused shape and the beam intensity profile shown in (3A) and (3B) of FIG. 3 are used to adjust the power density and the scanning rate of this laser beam LB, and the energy densities Edm and Edn are appropriately set. Then, scanning with the laser beam LB is performed at a high speed along the laser scanning direction S to form the groove U shown in (3C) and (3D) of FIG. 3.

The laser beam LB forms a deep groove portion U1 of the groove U on the sheet surface of the grain-oriented electrical steel sheet 100 by the central irradiation part M1 with a high energy density, and simultaneously heats the periphery of the central irradiation part M1 by the peripheral irradiation part N1 with a low energy density.

As described above, the laser beam LB simultaneously heats a following position with respect to the central irradiation part M1 along the laser scanning direction S of the central irradiation part M1 and at least one of positions on both sides of the groove U along the T direction perpendicular to the laser scanning direction S by the peripheral irradiation part N1.

Such heating prevents the molten material generated when the deep groove portion U1 is formed in the central irradiation part M1 from being raised around the deep groove portion U1 or from re-adhering to the sheet surface of the grain-oriented electrical steel sheet 100 after scattering, and solidifying into an upheaval shape. Therefore, it is possible to minimize the molten material remaining as an upheaval on the surface of the grain-oriented electrical steel sheet 100. In addition, since the molten metal that may cause the upheaval is heated by the peripheral irradiation part N1, the fluidity increases as the viscosity decreases, and the molten metal moves toward the center of the deep groove portion U1. Thus, a shape in which end portions of the groove U in the groove width direction T are inclined toward the center of the deep groove portion U1 is formed, and it is possible to minimize generation of an upheaval raising from the sheet surface of the grain-oriented electrical steel sheet 100.

In a case where scanning with the laser beam LB is performed along the laser scanning direction S, a leading portion of the peripheral irradiation part N1 having a low energy density with respect to the central irradiation part M1 advances prior to the scanning of the central irradiation part M1 having a high energy density. Therefore, a position where the deep groove portion U1 is to be formed by the central irradiation part M1 is preliminarily heated by the peripheral irradiation part N1. As a result, there is an effect of improving the groove processing efficiency at a high power intensity by the central irradiation part M1.

The groove U formed by scanning processing with the laser beam LB according to the present embodiment has a multistage shape including a deep groove portion U1 having a U-shaped cross-sectional shape or a V-shaped cross-sectional shape with the deepest point and a groove edge portion U2 having a gradient gentler than a gradient of a wall surface of the deep groove portion U1 as viewed in the cross section in the groove width direction, which is a cross section in the T direction perpendicular to the groove extending direction S. That is, in a case where the groove U is formed by the laser beam LB, rapid cooling and solidification of the molten material generated when heated by the central irradiation part M1 are prevented through heating by the peripheral irradiation part N1. As a result, it is possible to minimize solidification of the molten material in a state of being raised as an upheaval. In addition, the viscosity of the molten metal through heating by the central irradiation part M1 is reduced through heating by the peripheral irradiation part N1. Therefore, the molten metal flows toward the deep groove portion U1 side and flows into the groove U. As a result, since the groove edge portion U2 having a gentle gradient is formed along the side of the deep groove portion U1 in the portion of the groove U irradiated in the peripheral irradiation part N1, it is possible to reduce the occurrence of an upheaval raising (higher than the sheet surface) from the sheet surface of the grain-oriented electrical steel sheet 100.

Here, a straight line extending along the sheet surface of the grain-oriented electrical steel sheet 100 is defined as a surface reference line, and when the groove U is viewed in a cross section along the groove width direction T perpendicular to the groove extending direction S and the normal direction Z, the maximum depth D, which is a distance from the surface reference line to the deepest point of the groove U, is preferably 10 [$\mu$m] or more and 50 [$\mu$m] or less. In a case where the maximum depth D is less than 10 $\mu$m, the reduction effect of iron loss is hardly obtained, and in a case where the maximum depth D is more than 50 $\mu$m, the magnetic flux density capable of being generated is significantly reduced, so that the performance of an iron core of the transformer is greatly reduced. Note that the surface reference line can be obtained, for example, by obtaining a surface roughness curve of the sheet surface of the grain-oriented electrical steel sheet 100 at a position where the grooves U are not formed and averaging the surface roughness curve. In the present embodiment, in a case where the groove U is scanning-processed with the laser beam LB, upheavals are not formed on both adjacent sides of the groove U, so that the sheet surface of the grain-oriented electrical steel sheet 100 follows the surface reference line.

Note that the maximum depth D of the groove U is obtained, for example, by performing image analysis on a cross-sectional image along the groove width direction T obtained by a scanning electron microscope (SEM), determining a surface reference line or the like from the cross-sectional shape of the groove U in this cross-sectional image and the cross-sectional shape of the surface of the grain-oriented electrical steel sheet 100, and similarly measuring the maximum depth D of the groove U based on the surface reference line as a boundary by the image analysis.

FIG. 4 shows a relationship between a focused shape of a conventional laser beam LB100 and a groove U100 formed by the conventional laser beam LB100. More specifically, (4A) and (4B) of FIG. 4 show a constitution of the conventional laser beam LB100. Here, (4A) of FIG. 4 is a schematic diagram showing a focused shape of the laser beam LB100, and (4B) of FIG. 4 is a schematic diagram showing a beam intensity profile of the laser beam LB100 in the vertical direction of the sheet surface. (4C) of FIG. 4 is a schematic diagram of a surface of the groove U100 formed by scanning with the conventional laser beam, and (4D) of FIG. 4 is a schematic diagram of a cross section of the groove U100 along the T direction.

The conventional laser beam LB100 has, for example, a circular energy density portion on the surface of the grain-oriented electrical steel sheet 100, a beam intensity profile of the energy density portion follows a Gaussian like distribution, and the energy density portion has a single peak. In this case, as shown in (4C) and (4D) of FIG. 4, the groove U100 formed by the laser beam LB 100 is formed along the laser scanning direction S of the laser beam LB100 finely condensed according to the Gaussian like distribution. However, due to heating by the high energy density portion at the center of the laser beam LB100, the metal melts on the sheet surface of the grain-oriented electrical steel sheet 100, leading to evaporation. Thus, the molten metal is pushed out of the groove U100 by a large pressure generated when the molten metal evaporates, and the molten metal adheres in a state of being raised from the sheet surface of the grain-oriented electrical steel sheet 100 at a position of an edge of the groove U100. Thereafter, since the molten metal is solidified while being raised by rapid cooling, an upheaval 101 is formed on the sheet surface of the grain-oriented electrical steel sheet 100.

The principle of forming the groove U100 on the sheet surface of the grain-oriented electrical steel sheet 100 by processing with the finely condensed laser beam LB100 lies in the temperature rise and melting of the metal constituting the grain-oriented electrical steel sheet 100 due to absorption of the laser beam LB100, followed by the flow, evaporation, and scattering of the molten metal. In particular, in the processing performed by scanning with the laser beam LB 100 having a high energy density only at the center, a keyhole filled with high-temperature metal vapor exceeding the boiling point is locally formed at the irradiation point. Then, the molten metal is pushed out to the sheet surface around the groove U100 by the pressure of the metal vapor.

In the scanning processing with the finely condensed laser beam LB 100, a region where the temperature reaches a high temperature equal to or higher than the melting point by irradiation with this laser beam LB100 is very limited, and the surface temperature around the groove U100 is relatively low. As a result, the molten metal pushed out of the groove U100 is rapidly cooled on the surrounding surface, and surface tension acts in the molten state, so that the molten metal solidifies while being raised to be the upheaval 101.

Furthermore, in a case where scanning with the laser beam LB100 is performed at a high speed, the molten metal is pushed out and flows at a high speed toward the following side along the laser scanning direction S because the molten metal is pressed between the keyhole and a solid layer immediately below the molten portion due to the pressure within the keyhole. The molten metal flowing at a high speed is solidified by rapid cooling after being pushed up. As a result, an upheaval having a height higher than the sheet surface of the grain-oriented electrical steel sheet 100 may be formed at the center of the groove U100.

In contrast, in the present embodiment, the laser beam LB is used, the laser beam LB including, in addition to the central irradiation part M1 that has a high power intensity for melting and evaporating the metal, the peripheral irradiation part N1 that has a low power intensity for increasing the temperature close to the melting point of the metal and that is also disposed on the following side with respect to the central irradiation part M1 in the scanning direction S. Thus, in the present embodiment, in a case where the groove U is formed through heating by the central irradiation part M1, the periphery of this groove U is heated by the peripheral irradiation part N1 having a low energy density, and the temperature is increased to the melting point or to a temperature close to the melting point. Therefore, the rapid cooling and solidification of the molten metal pushed up at the following side with respect to the scanning direction S, which occurs during the scanning of the central irradiation part M1, is mitigated, and the high temperature of the molten metal is maintained. Therefore, the viscosity of the molten metal decreases, and a phenomenon of solidification in an upheaval shape can be minimized. As a result, the formation of an upheaval at the center of the groove U can be minimized.

In addition, the high temperature state of the molten metal on the surrounding surface of the deep groove portion U1 formed through heating by the central irradiation part M1 is maintained for a relatively long time without generating a large evaporation pressure by reducing the energy density Edn of the peripheral irradiation part N1 to an energy density at which the metal on the sheet surface of the grain-oriented electrical steel sheet 100 does not reach the boiling point thereof. The molten metal in the portion heated by the peripheral irradiation part N1 merges with the molten metal pushed out of the inside of the deep groove portion U1, and the merged molten metal passes through the peripheral irradiation part N1, followed by solidification while flowing toward a groove bottom portion of the deep groove portion U1. As a result, the depth of the deep groove portion U1 in the central part is slightly shallower, and the shallow groove edge portion U2 is formed around the deep groove portion U1, so that it is possible to prevent an upheaval from occurring between the groove U and the surface of the grain-oriented electrical steel sheet 100 in the direction X intersecting the laser scanning direction Y.

In addition, a position where a groove is to be formed is heated in advance by the peripheral irradiation part N1 having a low power intensity prior to heating at the leading position with respect to the laser scanning direction S of the laser beam LB (forward in the traveling direction when scanning is performed with the laser beam LB) by the central irradiation part M1 having a high power intensity. Since the heating by the peripheral irradiation part N1 has a preheating effect on the position where the groove is to be formed, an effect of improving the groove processing efficiency is achieved with the central irradiation part M1. Furthermore, since the heating by the peripheral irradiation part N1 has an effect of mitigating the rapid cooling of the molten metal at the following position with respect to the laser scanning direction S of the laser beam LB, it is possible to reduce a phenomenon in which the molten metal in the groove U solidifies into an upheaval shape while being raised to be higher than the sheet surface. With the above-described effect, in the present embodiment, it is possible to minimize the formation of the upheaval around the groove U.

(3) <Implementation Timing of Laser Processing Step of Scanning Processing Groove>

Next, a production step of scanning processing a plurality of grooves U on the grain-oriented electrical steel sheet 100 using the groove processing apparatus 1 according to the present embodiment will be described. FIG. 5 is a schematic diagram showing individual production steps after the cold rolling step in the production procedure of the grain-oriented electrical steel sheet 100. In the present production step, first, a hot-rolled electrical steel sheet coil containing Si in an amount of 2 to 8[%] is rolled to a sheet thickness of about 0.2 to 0.3 [mm] by cold rolling (step S1). Thereafter, primary recrystallization annealing is performed to form an $SiO_2$ coating on the sheet surface (step S2).

Then, an annealing separator mainly containing MgO is applied to the sheet surface, and secondary recrystallization annealing is performed, thereby allowing so-called Goss grains in which the rolling direction coincides with the magnetization easy axis to be preferentially crystal-grown (secondary recrystallization occurs). Furthermore, $SiO_2$ and MgO react with each other to form a glass-shaped coating (referred to as a glassy coating) on the sheet surface (step S3). It is known that iron loss of the grain-oriented electrical steel sheet 100 is reduced by adding surface tension. Therefore, after the secondary recrystallization annealing, an insulation coating is applied to the sheet surface for the purpose of annealing to flatten the steel sheet deformed due to annealing, and furthermore imparting surface tension and securing electrical insulation properties (step S4). The grain-oriented electrical steel sheets 100 thus obtained are used as final products A and B. In addition, in a case where the timing of performing groove processing with a laser described later is after step S4 (LP4), additional recoating is performed on the surface of the insulation coating layer after step S4 (step S5), and the obtained grain-oriented electrical steel sheet 100 is used as a final product C.

Here, at any timing of LP1 to LP4 shown in FIG. 5, it is possible to carry out a laser processing step (groove processing step) of scanning processing a groove U on the sheet surface using the groove processing apparatus 1 according to the present embodiment.

FIG. 6 shows cross-sectional views of a product when the groove U is processed using the groove processing apparatus 1 according to the present embodiment. More specifically, (LP1a) and (LP1b) of FIG. 6 are cross-sectional views showing a cross-sectional constitution of the product A obtained in a case where a laser processing step LP1 is carried out after the cold rolling step in step S1. $SiO_2$ is formed in the product A in step S2 after the groove U is processed with the laser, a reaction with MgO occurs in step S3, and insulation coating is performed in step S4. Therefore, a glassy coating 105 is formed inside the groove U, and an insulation coating layer 106 is further formed on the glassy coating 105.

Since the insulation coating layer 106 has an element component different from that of the steel material serving as a processed base metal 100b, the processed base metal 100b can be distinguished from the glassy coating 105 by secondary electron beam analysis using an electron microscope or characteristic X-ray analysis in cross-section observation in addition to optical microscope observation. On the other hand, although an extremely thin melt-resolidified layer is formed in the groove U and the periphery thereof immediately after the laser processing, the melt-resolidified layer is almost lost by the secondary recrystallization annealing in subsequent step S3, so that it is difficult to observe the melt-resolidified layer in the final product.

Here, in a case where the groove U is processed on the sheet surface of the grain-oriented electrical steel sheet 100 using the groove processing apparatus 1 according to the present embodiment, the beam intensity of the laser beam LB in the peripheral irradiation part N1 can be adjusted to form the groove U having only the deep groove portion U1 without any upheaval formed around the groove U as shown in (LP1a) of FIG. 6, or the groove U having a multistage shape in which the groove edge portion U2 having a gentle gradient is formed in addition to the deep groove portion U1 as shown in (LP1b) of FIG. 6.

The groove U shown in (LP1a) of FIG. 6 is obtained in a case where the beam intensity of the peripheral irradiation part N1 is relatively low, and includes only the deep groove portion U1 formed in the groove U but a groove edge portion with a gentle gradient is not formed. However, no upheaval is formed around the groove U. The groove U shown in (LP1b) of FIG. 6 is obtained in a case where the beam intensity of the peripheral irradiation part N1 is relatively high, and constant melting occurs around the deep groove portion U1 when the deep groove portion U1 is formed. Thus, the groove U has a multistage shape in which the groove edge portion U2 having a gentler gradient than a gradient of a wall surface of the deep groove portion U1 is formed along the deep groove portion U1. Also in this case, no upheaval is formed around the groove U.

(LP2a) and (LP2b) of FIG. 6 are cross-sectional views of the product A obtained in a case where a laser processing step LP2 is carried out after the primary recrystallization annealing step in step S2. In this case, since the laser processing step LP2 is carried out on the sheet surface of the grain-oriented electrical steel sheet 100 that has been subjected to the primary recrystallization annealing, $SiO_2$ formed by the primary recrystallization is removed when the groove processing is performed with the laser beam LB. As a result, the glassy coating 105 formed by the reaction between MgO and $SiO_2$ applied later is not formed inside the groove U. Therefore, in this case, only the insulation coating layer 106 is formed in the groove U of the product A. In addition, the melt-resolidified layer produced on the surface of the groove U immediately after the laser processing is removed by the high-temperature secondary recrystallization annealing (step S3) which is the post step.

The groove U shown in (LP2a) of FIG. 6 is obtained with a relatively low beam intensity of the peripheral irradiation part N1. The groove U shown in (LP2b) of FIG. 6 is obtained with a relatively high beam intensity of the peripheral irradiation part N1. In both of (LP2a) and (LP2b), no upheaval is formed around the groove U when the deep groove portion U1 is formed through heating by the peripheral irradiation part N1.

(LP3a) and (LP3b) of FIG. 6 are cross-sectional views of the product A obtained in a case where a laser processing step LP3 is carried out after the secondary recrystallization annealing step in step S3. In this case, since the laser processing step LP3 is carried out on the sheet surface that has been subjected to the secondary recrystallization annealing, the glassy coating 105 formed in the groove U by the time of the secondary recrystallization annealing step is removed by the laser beam LB. In addition, since a high-temperature annealing step for removing the melt-resolidified layer is not provided after the laser processing step LP3, the melt-resolidified layer 108 formed in the groove U does not removed and remains as it is, and the insulation coating layer 106 is formed on the melt-resolidified layer 108. Note that, for the melt-resolidified layer 108, the average grain size of columnar crystals and grains formed during rapid cooling can be determined by observation with cross-sectional microscopic observation.

The groove U shown in (LP3a) of FIG. 6 is obtained with a relatively low beam intensity of the peripheral irradiation part N1. The groove U shown in (LP3b) of FIG. 6 is obtained with a relatively high beam intensity of the peripheral irradiation part N1. In both of (LP3a) and (LP3b), no upheaval is formed around the groove U when the deep groove portion U1 is formed through heating by the peripheral irradiation part N1.

FIG. 7 shows cross-sectional views of a product in which the groove U is processed using the groove processing apparatus 1 according to the present embodiment. More specifically, (LP4a-1) and (LP4b-1) of FIG. 7 are cross-sectional views of the product B obtained in a case where a laser processing step LP4 is carried out after the insulation coating step in step S4. The groove U shown in (LP4a-1) of FIG. 7 is obtained with a relatively low beam intensity of the peripheral irradiation part N1. The groove U shown in (LP4b-1) of FIG. 7 is obtained with a relatively high beam intensity of the peripheral irradiation part N1. In both of (LP4a-1) and (LP4b-1), no upheaval is formed around the groove U when the deep groove portion U1 is formed through heating by the peripheral irradiation part N1. In this case, since the laser processing step LP4 is carried out after a tension-coating step is completed, the glassy coating 105 and the insulation coating layer 106 formed in the groove U on the sheet surface by the time of the secondary recrystallization annealing step is removed by the laser beam LB, and only the melt-resolidified layer 108 remains.

(LP4a-2) and (LP4b-2) of FIG. 7 are cross-sectional views of the product C obtained in a case where the laser processing step LP4 is carried out after the insulation coating step in step S4, and thereafter, a recoating step is further carried out. The groove U shown in (LP4a-2) of FIG. 7 is obtained with a relatively low beam intensity of the peripheral irradiation part N1. The groove U shown in LP4b-2 of FIG. 7 is obtained with a relatively high beam intensity of the peripheral irradiation part N1. In both of (LP4a-2) and (LP4b-2), no upheaval is formed around the groove U when the deep groove portion U1 is formed through heating by the peripheral irradiation part N1.

In this case, since the recoating step is carried out, the insulation coating layer 106 is also formed on the melt-resolidified layer 108 remaining in the groove U by the recoating step. In addition, the thickness of the insulation coating layer 106 on the sheet surface, which is formed by the insulation coating step in step S4 is increased by carrying out the recoating step.

(4) <Operations and Effects>

The groove processing apparatus 1 having the constitution described above performs scanning with the laser beam LB to form the grooves U at regular intervals or non-regular intervals in the rolling direction Y of the grain-oriented electrical steel sheet 100. The groove U has a maximum depth of 10 [μm] or more and 50 [μm] or less, and has a linear shape extending in the laser scanning direction S that is a direction parallel to the width direction X of the grain-oriented electrical steel sheet 100 perpendicular to the rolling direction Y or a direction inclined at a predetermined angle with respect to the width direction X. In this case, the laser beam LB including the central irradiation part M1 and the peripheral irradiation part N1 in which the periphery of the central irradiation part M1 is heated is used, and the energy density Edm of the central irradiation part M1 is set to be higher than the energy density Edn of the peripheral irradiation part N1.

As a result, the groove processing apparatus 1 can mitigate rapid cooling and solidification of the molten material generated when the deep groove portion U1 is formed by the central irradiation part M1 through heating the periphery of the central irradiation part M1 by the peripheral irradiation part N1, and minimize an upheaval raised from the sheet surface due to flow of the molten metal into the deep groove portion U1. Therefore, the groove U can be formed by scanning processing with the laser beam LB without forming an upheaval on the sheet surface. As a result, since no upheaval is generated, it is possible to reduce deterioration of iron loss as compared to the conventional technique in a case where the grain-oriented electrical steel sheets 100 are stacked to produce a transformer iron core. As described above, when it is intended to minimize the iron loss of the grain-oriented electrical steel sheet 100 by forming the groove U using the laser beam LB, it is possible to minimize an upheaval around the groove U as compared to the related art and to reduce the iron loss.

The deterioration of iron loss will be supplementarily described. First, a pair of grooves U adjacent to each other among the plurality of grooves U formed on the sheet surface is considered.

Conventionally, in a case where the molten portion generated in the periphery of each of the grooves U is solidified by rapid cooling, the melted and solidified portions pull each other on the sheet surface portion between the pair of grooves U, so that the sheet surface portion between the pair of grooves U slightly undulates in the sheet thickness direction. This undulation of the sheet surface occurs on the sheet surface between all the grooves U, that is, on almost the entire sheet surface. Therefore, in a case where the grain-oriented electrical steel sheets are stacked to produce a transformer iron core, the grain-oriented electrical steel sheets are deformed in a direction of reducing unevenness occurring due to undulation, so that the occurrence of strains cannot be avoided. Due to the strain during the stack, the iron loss of the grain-oriented electrical steel sheets increases at the time point after the stack than at the time point before the stack.

On the other hand, according to the groove processing method using the groove processing apparatus of the present embodiment, since the formation of the melted and solidified portion is minimized in all the grooves U, the obtained grain-oriented electrical steel sheet 100 can have a flat shape with less undulation. Therefore, since the undulation before the stack is small, the strain generated at the time of the stack is also small. Here, in a case where the amount of iron loss increased before and after the stack was evaluated as a building factor, the iron loss after the stack greatly increased as compared to the iron loss before the stack in a conventional grain-oriented electrical steel sheet, resulting in the bad building factor. In contrast, since the grain-oriented electrical steel sheet 100 of the present embodiment has almost no undulation due to the melted and solidified portion, the iron loss after the stack is almost the same as the iron loss before the stack, resulting in the excellent building factor.

In addition, regarding the groove processing apparatus 1 of the present embodiment, the groove processing apparatus 1 employs a constitution in which irradiation and heating are performed by the peripheral irradiation part N1 on the following position with respect to the central irradiation part M1 along the laser scanning direction S and at least one of positions on both sides of the groove U along the direction perpendicular to the laser scanning direction S. According to this constitution, it is possible to mitigate the rapid cooling and solidification of the molten material generated by heating the surface of the grain-oriented electrical steel sheet 100 by the central irradiation part M1, and to minimize the raised upheavals generated around the groove U and at the center of the groove U.

In addition, the groove processing apparatus 1 employs the constitution in which the leading position with respect to the central irradiation part M1 along the laser scanning direction S is irradiated and heated by the peripheral irradiation part N1, thereby preheating the surface of the grain-oriented electrical steel sheet 100 before being heated by the central irradiation part M1. According to this constitution, it is possible to improve the groove processing efficiency at a high power intensity by the central irradiation part M1.

(5) <Other Embodiments>

Note that, in the above-described embodiment, it has been described as the case in which the laser beam LB includes the central irradiation part M1 having a focused shape of a circle or an ellipse, in which a beam intensity profile in a vertical cross part with respect to the laser scanning direction S follows a Gaussian like distribution, and the peripheral irradiation part N1 having a focused shape of an annular or elliptical annular shape, in which a beam intensity profile of a vertical cross part with respect to the laser scanning direction S is strongest at the center of the annular shape and the beam intensity profile attenuates toward the inner circumferential portion and the outer circumferential portion, but the present invention is not limited only to the present example.

FIG. 8 is a schematic diagram showing a constitution of a laser beam LB2 according to another embodiment. (8A) of FIG. 8 is a schematic diagram showing a focused shape of the laser beam LB2 emitted from the laser irradiation device 3 toward the sheet surface of the grain-oriented electrical steel sheet 100, and (8B) of FIG. 8 is a schematic diagram showing an intensity profile of the laser beam LB2 on the T axis of the sheet surface of the grain-oriented electrical steel sheet 100, that is, a spatial distribution of a power [W] for the focused shape shown in (8A) of FIG. 8. In addition, (8C) of FIG. 8 is a schematic diagram showing a spatial distribution of the power [W] of the laser beam LB2 on the surface of the grain-oriented electrical steel sheet 100 on the S axis.

More specifically, for example, as shown in FIG. 8, a laser beam LB2 may be applied, the laser beam LB2 including a central irradiation part M2 having a circular focused shape and a flat-top distribution in which a beam intensity profile in the vertical cross section with respect to the laser scanning direction S is columnar, and a peripheral irradiation part N2 having an annular focused shape on the sheet surface and a flat-top distribution in which a beam intensity profile in the vertical cross section with respect to the laser scanning direction S is constant from an inner circumferential portion to an outer circumferential portion. In this case, the laser beam LB2 includes an annular non-irradiation part R2 between the central irradiation part M2 and the peripheral irradiation part N2 surrounding the periphery of the central irradiation part M2.

The laser beam LB2 having such a flat-top distribution as the beam intensity profile also has a peripheral irradiation part N2 through which the periphery of the central irradiation part M2 is heated. The energy density of the central irradiation part M2 is also set to be higher than the energy density of the peripheral irradiation part N2, and the same effect as that of the above-described embodiment can be obtained.

The energy densities of the central irradiation part M2 and the peripheral irradiation part N2 are denoted by Pdm and Pdn, respectively. Note that, although FIG. 8 shows the case where the central irradiation part M2 is a perfect circle and the peripheral irradiation part N2 is a perfect annular shape, the central irradiation part M2 may be elliptical and the peripheral irradiation part N2 may have an elliptical ring shape. That is, dmt and dms may be different from each other. In addition, dnit and dnis may be different from each other. Alternatively, dnot and dnos may be different from each other.

The power density Pdm [MW/cm$^2$] of the central irradiation part M2, the power density Pdn [MW/cm$^2$] of the peripheral irradiation part N2, the irradiation times Tm and Tn [s] of the central irradiation part M2 and the peripheral irradiation part N2 by scanning with the laser beam LB, the energy density Edm [J/cm$^2$] of the central irradiation part M2, and the energy density Edn [J/cm$^2$] of the peripheral irradiation part N2 are represented by the following (Equation 7) to (Equation 12), respectively. The power density Pdm of the central irradiation part M1 can exemplify a range of 5.0 [MW/cm$^2$] or more and 600 [MW/cm$^2$] or less. In addition, the power density Pdn of the peripheral irradiation part N1 can exemplify a range of 1.0 [MW/cm$^2$] or more and less than 5.0 [MW/cm$^2$]. In addition, as described above, the range of the energy density Edm of the central irradiation part M1 can be exemplified as 50 [J/cm$^2$] or more and 1000 [J/cm$^2$] or less, and the range of the energy density Edn of the peripheral irradiation part N1 can be exemplified as 1 [J/cm$^2$] or more and less than 50 [J/cm$^2$].

$$Pdm = Pm/(\pi/4 \times dmt \times dms) \cdots (Equation\ 7)$$

$$Pdn = Pn/(\pi/4 \times (dnot \times dnos - dnit \times dnis)) \cdots (Equation\ 8)$$

$$Tm = dms/Vs \cdots (Equation\ 9)$$

$$Tn = 2 \times (dnos - dnis)/Vs \cdots (Equation\ 10)$$

$$Edm = Pdm \times Tm \cdots (Equation\ 11)$$

$$Edn = Pdn \times Tn \cdots (Equation\ 12)$$

Furthermore, as a laser beam having a peripheral irradiation part through which the periphery of the central irradiation part is heated, for example, as shown in FIG. 9, a laser beam LB3 can be applied, the laser beam LB3 having a beam intensity profile continuously connected without providing a portion where power is substantially 0 (a portion that can be regarded as 0) at a boundary between the central irradiation part M3 and the peripheral irradiation part N3 surrounding the periphery of the central irradiation part M3. (9A) of FIG. 9 is a schematic diagram showing a focused shape of the laser beam LB3 emitted from the laser irradiation device 3 toward the grain-oriented electrical steel sheet 100. (9B) of FIG. 9 is a schematic diagram showing an intensity profile of the laser beam LB3 on the sheet surface of the grain-oriented electrical steel sheet 100 on the T axis, that is, a spatial distribution of the power [W] for the focused shape shown in (9A) of FIG. 9. In addition, (9C) of FIG. 9 is a schematic diagram showing a spatial distribution of the power [W] of the laser beam LB3 on the sheet surface of the grain-oriented electrical steel sheet 100 on the S axis.

In this case, the diameter dmt of the central irradiation part M3 in the T direction and the diameter dnit of the inner circumferential portion of the peripheral irradiation part N3 coincide with each other at a position where the intensity is 1/e$^2$ times the maximum power of the central irradiation part M3 with the irradiation surface irradiated with the laser beam LB3 as a reference location, and regions of the diameters dmt and dms of the central irradiation part M3 have a high power intensity. In contrast, a region from the diameters dmt and dms of the central irradiation part M3 to the diameters dnot and dnos of the outer circumferential portion of the peripheral irradiation part N3 has a low power intensity. Note that dnot and dnos are diameters at positions where the intensity is $1/e^2$ times the maximum power Pn of the peripheral irradiation part N3.

Such a laser beam LB3 also has the peripheral irradiation part N3 through which the periphery of the central irradiation part M3 is heated. Since the energy density Edm [J/cm$^2$] of the central irradiation part M3 is also set to be higher than the energy density Edn [J/cm$^2$] of the peripheral irradiation part N3, the same effect as that of the above-described embodiment can be obtained.

In (9B) of FIG. 9, although the central irradiation part M3 is a perfect circle, and the peripheral irradiation part N3 is a perfect circle, the present invention is not limited to this example, and the central irradiation part M3 and the peripheral irradiation part N3 may be elliptical, that is, dmt and dms may be different from each other, and dnot and dnos may be different from each other.

The power density Pdm [MW/cm$^2$] of the central irradiation part M3, the power density Pdn [MW/cm$^2$] of the peripheral irradiation part N3, the irradiation times Tm and Tn [s] of the central irradiation part M3 and the peripheral irradiation part N3 by scanning with the laser beam LB3, the energy density Edm [J/cm$^2$] of the central irradiation part M3, and the energy density Edn [J/cm$^2$] of the peripheral irradiation part N3 are represented by the following (Equation 13) to (Equation 18), respectively.

$$Pdm = Pm/(\pi/4 \times dmt \times dms) \cdots \text{(Equation 13)}$$

$$Pdn = Pn/(\pi/4 \times (dnot \times dnos)) \cdots \text{(Equation 14)}$$

$$Tm = dms/Vs \cdots \text{(Equation 15)}$$

$$Tn = 2 \times (dnos - dnis)/Vs \cdots \text{(Equation 16)}$$

$$Edm = Pdm \times Tm \cdots \text{(Equation 17)}$$

$$Edn = Pdn \times Tn \cdots \text{(Equation 18)}$$

In addition, as shown in FIG. 10, for example, a total of four peripheral irradiation parts N4, two in the S axis direction serving as a laser scanning direction and two in the T axis direction serving as a direction perpendicular to the S axis direction, may be independently arranged at positions separated from the central irradiation part M4. (10A) of FIG. 10 is a schematic diagram showing a focused shape of the laser beam LB4 emitted from the laser irradiation device 3 toward the grain-oriented electrical steel sheet 100. (10B) of FIG. 10 is a schematic diagram showing an intensity profile of the laser beam LB4 on the sheet surface of the grain-oriented electrical steel sheet 100 on the T axis, that is, a spatial distribution of the power [W] for the focused shape shown in (10A) of FIG. 10. In addition, (10C) of FIG. 10 is a schematic diagram showing a spatial distribution of the power [W] of the laser beam LB4 on the surface of the grain-oriented electrical steel sheet 100 on the S axis.

FIG. 10 shows an example in which the peripheral irradiation part N4 has a beam intensity profile following a Gaussian like distribution in the cross section perpendicular to the S axis or the T axis, but the peripheral irradiation part N4 may have a rectangular distribution (flat-top distribution) as shown in FIG. 8, for example. In addition, in FIG. 10, the central irradiation part M4 and the peripheral irradiation part N4 are formed in a perfect circular shape, but may be formed in an elliptical shape having different diameters in the S direction and the T direction.

In addition, one peripheral irradiation part N4 is arranged on the leading side and one peripheral irradiation part N4 is arranged on the following side with respect to the central irradiation part along the S axis direction in the T axis direction, and peripheral irradiation parts N4 are arranged on the left and right sides in the T axis direction, but the number of peripheral irradiation parts N4 is not limited to this example, and the number of peripheral irradiation parts may be appropriately changed as shown by a laser beam LB5 in FIG. 11 and a laser beam LB6 in FIG. 12. (11A) of FIG. 11 and (12A) of FIG. 12 are schematic diagrams showing focused shapes of the laser beams LB5 and LB6 emitted from the laser irradiation device 3 toward the grain-oriented electrical steel sheet 100. (11B) of FIG. 11 and (12B) of FIG. 12 are schematic diagrams showing intensity profiles of the laser beams LB5 and LB6 on the surface of the grain-oriented electrical steel sheet 100 on the T axis, that is, spatial distributions of the power [W] for the focused shapes shown in (11A) of FIG. 11 and (12A) of FIG. 12. In addition, (11C) of FIG. 11 and (12C) of FIG. 12 are schematic diagrams showing spatial distributions of the power [W] of the laser beams LB5 and LB6 on the surface of the grain-oriented electrical steel sheet 100 on the S axis.

Even with such laser beams LB4 to LB6, it is possible to prevent the molten material generated when the grooves U are formed by the central irradiation parts M4 to M6 from being raised to be higher than the sheet surface and solidified around the grooves U and to minimize the occurrence of an upheaval.

Note that, in the groove processing method for the surface of the grain-oriented electrical steel sheet 100 according to the present embodiment, it is sufficient to use a laser beam having an intensity profile including the central irradiation part having a high energy density for forming the groove U and the peripheral irradiation part having a low energy density for minimizing an upheaval in the periphery thereof and additionally improving groove processing efficiency. Therefore, as the intensity profile of the laser beam having such an effect, shapes and intensity profiles of the central irradiation parts M1 to M6 and the peripheral irradiation parts N1 to N6 shown in FIGS. 2 and 8 to 12 may be appropriately combined and applied. In this combination, the power distribution may be a combination of a Gaussian like distribution and a flat-top distribution. In addition, the focused shape of each of the central irradiation part and the peripheral irradiation part may be a polygonal shape such as a rectangular shape. The focused shape of the peripheral irradiation part may be a rectangular annular shape, a semi-annular shape, or the like. Furthermore, in FIGS. 2 and 8, the peripheral irradiation parts N1 and N2 are formed in a single annular shape, but may be formed in a plurality of annular shapes such as double or triple rings.

As a method for obtaining a laser beam having various intensity profiles as described above, by using fibers for fiber bundle transmission in which a plurality of optical fibers is bundled, each laser power is transmitted from a plurality of laser devices to each optical fiber corresponding to each of the central irradiation part and the peripheral irradiation part, so that desired intensity profiles can be formed in the irradiation parts.

In addition, a diffractive optical element (DOE) that converts an intensity profile of the laser output into a plurality of intensity profiles using a diffraction phenomenon of light may be used.

In addition, as the laser beam scanning method described with reference to FIG. 1, a galvanometer mirror that is a vibrating mirror may be used in addition to a rotating polygonal mirror. In addition, a parabolic mirror may be used as a condensing element.

(6) <Verification Test>

Next, a verification test was performed for confirming whether or not an upheaval was formed around the groove when the groove was scanning-processed with a laser beam including a peripheral irradiation part for heating the periphery of the central irradiation part. The grain-oriented electrical steel sheet 100 used in this verification test was produced by sequentially performing a hot rolling step, a cold rolling step, a primary recrystallization step, a MgO application step, a secondary recrystallization annealing step, a flattening step, and a surface coating step on a slab containing Si as a main component in an amount of 3%. The groove was scanning-processed on the sheet surface after the cold rolling step by changing laser processing conditions of the laser beam of the groove processing apparatus.

FIG. 13 is a schematic diagram showing a grain-oriented electrical steel sheet 100 in which a plurality of grooves U are formed by a laser beam LB in a verification test. The groove U is processed by scanning with the laser beam LB such that the plurality of grooves U extend in a direction inclined at a predetermined angle with respect to the width direction of the grain-oriented electrical steel sheet 100 at regular intervals PL in the rolling direction of the grain-oriented electrical steel sheet 100. The interval PL between the grooves U in the rolling direction was 3 [mm], and the angle formed by the laser scanning direction S and the width direction of the grain-oriented electrical steel sheet 100 was 10 [degrees].

One coil was prepared by winding the grain-oriented electrical steel sheet 100 after the cold rolling step (step S1). The groove U was then processed by changing the laser processing conditions every 100 mm in the rolling direction to form a portion having different laser conditions every 100 m in the rolling direction, and then this coil was subjected to a treatment of adding the steps carried out after the primary recrystallization annealing step, thereby producing the grain-oriented electrical steel sheet 100 as a final product. The sheet thickness of the grain-oriented electrical steel sheet 100 of the final product is 0.23 [mm].

Then, the performance related to the iron loss of each final product depending on the laser processing conditions was compared. Specifically, from the coil of the grain-oriented electrical steel sheet 100 produced by changing the laser processing conditions, rectangular grain-oriented electrical steel sheets 100 of 30 [mm] in the sheet width direction × 320 [mm] in the rolling direction were cut out as samples for each region where the laser processing conditions were changed, and 36 sheets were set as one set, and 10 sets were prepared. Then, as shown in FIG. 14, in each set, 9 grain-oriented electrical steel sheets 100 were stacked to prepare 4 stacked blocks, and these stacked blocks were assembled into a square shape to prepare a simulated transformer iron core 200 for simulating the iron core of the transformer for each sample with a different laser processing condition.

Next, the iron loss of the simulated transformer iron core 200 prepared for each sample with a different laser processing condition was measured according to the Epstein method (JIS C2550-2011) for measuring iron loss. Thereafter, the stacked block of the simulated transformer iron core 200 was pressurized at 5 kgf/cm$^2$, and the iron loss was measured in the same manner to evaluate the iron loss. A value of the iron loss was obtained as an iron loss $W_{17/50}$ in an AC magnetic field having a magnetizing force of 1.7 [T] and a frequency of 50 [Hz]. The number of stacked blocks under each laser condition was 10 sets, and a measurement value was the average value of these 10 sets.

A groove depth and an average height H of the upheavals were obtained by measuring groove depths and upheaval heights with microscopic observation on 20 cross sections randomly extracted to obtain the average value thereof. The laser processing conditions, groove processing results, and iron loss characteristics in the verification test are shown in Tables 1A and 1B.

[Table 1A]

| Condition No. | Type | Maximum power of central irradiation part | Maximum power of peripheral irradiation part | Shape of central irradiation part | | Shape of peripheral irradiation part (inner diameter) | | Shape of peripheral irradiation part (outer diameter) | |
|---|---|---|---|---|---|---|---|---|---|
| | | Pm | Pn | dmt | dms | dnit | dnis | dnot | dnos |
| | | W | W | cm | | cm | | cm | |
| 1 | Reference | - | - | - | - | - | - | - | - |
| 2 | Comparative Example 1 | 1000 | - | 0.0028 | 0.0028 | - | - | - | - |
| 3 | Invention Example 1 | 1000 | 400 | 0.0028 | 0.0028 | 0.004 | 0.004 | 0.008 | 0.008 |
| 4 | Comparative Example 2 | 250 | 100 | 0.0028 | 0.0028 | 0.004 | 0.004 | 0.008 | 0.008 |
| 5 | Comparative Example 3 | 6000 | 400 | 0.0028 | 0.0028 | 0.004 | 0.004 | 0.008 | 0.008 |
| 6 | Comparative Example 4 | 1000 | 10 | 0.0028 | 0.0028 | 0.004 | 0.004 | 0.008 | 0.008 |
| 7 | Comparative Example 5 | 1000 | 700 | 0.0028 | 0.0028 | 0.004 | 0.004 | 0.008 | 0.008 |
| 8 | Invention Example 2 | 270 | 12 | 0.0028 | 0.0028 | 0.004 | 0.004 | 0.008 | 0.008 |
| 9 | Invention Example 3 | 5500 | 600 | 0.0028 | 0.0028 | 0.004 | 0.004 | 0.008 | 0.008 |
| 10 | Invention Example 4 | 1000 | 12 | 0.0028 | 0.0028 | 0.004 | 0.004 | 0.008 | 0.008 |
| 11 | Invention Example 5 | 1000 | 600 | 0.0028 | 0.0028 | 0.004 | 0.004 | 0.008 | 0.008 |

[Table 1B]

| Condition No. | Power density of central irradiation part | Power density of peripheral irradiation part | Scanning rate | Irradiation time of central irradiation part | Irradiation time of peripheral irradiation part | Energy density of central irradiation part | Energy density of peripheral irradiation part | Average groove depth | Average upheaval height | Iron loss | Iron loss during pressurization |
|---|---|---|---|---|---|---|---|---|---|---|---|
| | Pdm | Pdn | Vs | Tm | Tn | Edm | Edn | D | H | $W_{17/50}$ | $W_{17/50}$ |
| | MW/cm$^2$ | MW/cm$^2$ | cm/s | μs | μs | J/cm$^2$ | J/cm$^2$ | μm | μm | W/kg | W/kg |
| 1 | - | - | - | - | - | - | - | - | - | 0.85 | 0.85 |
| 2 | 162.5 | - | 2500 | 1.1 | - | 182.0 | - | 25 | 4 | 0.71 | 0.78 |
| 3 | 162.5 | 10.6 | 2500 | 1.1 | 3.2 | 182.0 | 34.0 | 24 | 0 | 0.71 | 0.71 |
| 4 | 40.6 | 2.7 | 2500 | 1.1 | 3.2 | 45.5 | 8.5 | 8 | 0 | 0.80 | 0.80 |
| 5 | 974.9 | 10.6 | 2500 | 1.1 | 3.2 | 1091.9 | 34.0 | 60 | 15 | 0.81 | 0.92 |
| 6 | 162.5 | 0.3 | 2500 | 1.1 | 3.2 | 182.0 | 0.8 | 25 | 5 | 0.72 | 0.79 |
| 7 | 162.5 | 18.6 | 2500 | 1.1 | 3.2 | 182.0 | 59.4 | 25 | 4 | 0.71 | 0.78 |
| 8 | 43.9 | 0.3 | 2500 | 1.1 | 3.2 | 49.1 | 1.0 | 10 | 0 | 0.74 | 0.74 |
| 9 | 893.7 | 15.9 | 2500 | 1.1 | 3.2 | 1000.9 | 51.0 | 49 | 0 | 0.73 | 0.73 |
| 10 | 162.5 | 0.3 | 2500 | 1.1 | 3.2 | 182.0 | 1.0 | 25 | 0 | 0.71 | 0.71 |
| 11 | 162.5 | 15.9 | 2500 | 1.1 | 3.2 | 182.0 | 51.0 | 27 | 0 | 0.72 | 0.72 |

In the verification test, the groove processing apparatus 1 shown in FIG. 1 was used. In the verification test, a fiber laser having a wavelength of about 1.07 [μm] was used. The output of the fiber laser is transmitted by the optical fiber cable 4. As the optical fiber cable 4, an optical fiber cable is used, the optical fiber cable having a core with a double structure for transmitting light and including a central circular core and a peripheral annular core around the central circular core. Each laser power of the central irradiation part M1 and the peripheral irradiation part N1 of the laser beam was adjusted by changing laser power transmitted in the center core and the peripheral core of the fiber with a power division adjustment device in the laser irradiation device 3. The laser irradiation device 3 includes a rotating polygonal mirror for scanning with a laser beam, an fθ lens serving as an element that condenses the scanned laser beam, and the like. The shape and intensity profile of the laser beam condensed and emitted to irradiate the steel sheet were such that the central irradiation part M1 shown in FIG. 2 had a circular Gaussian like distribution, and the peripheral irradiation part N1 had a distribution in which an intensity was maximized at the center of the annular shape and the intensity decreased toward the periphery.

Condition No. 1 (reference) is a simulated transformer iron core 200 manufactured using a portion of the verification coil that is not subjected to laser groove processing. On the other hand, an iron loss value measured by the Epstein method, an iron loss value when pressurization was performed, and the like were obtained and used as reference values of this verification test.

Condition No. 2 (Comparative Example 1) is a simulated transformer iron core 200 manufactured using a portion of the verification coil that is subjected to a conventional laser groove processing method. Here, as a condition of the laser groove processing, a processing condition in which the maximum power of the central irradiation part M1 is 1000 W and the power of the peripheral irradiation part is 0 W, that is, a laser processing condition when a single Gaussian like beam as a conventional technique is used was used. In the present Condition No. 2, the average groove depth and the average upheaval height were also obtained as the groove processing results, and an iron loss value measured by the Epstein method and an iron loss value when pressurization was performed were obtained as the iron loss characteristics. As shown in Table 1B, under Condition No. 2, an average groove depth D was 25 [μm], and an average upheaval height H of upheavals 101 was 4 [μm]. Since the groove depth is formed at an appropriate depth, the iron loss is lower than that in the reference example of Condition No. 1. However, since the upheavals 101 having the average height of 4 μm were generated, the iron loss during pressurization increased. Therefore, there was a problem in terms of the building factor.

Condition No. 3 (Invention Example 1) is an example of the above-described embodiment. This Condition No. 3 is a simulated transformer iron core 200 manufactured using a portion of the verification coil that is subjected to the laser groove processing method of the above-described embodiment. Here, the beam intensity profile of the central irradiation part M1, the power, focused shape, scanning rate, and the like of the central irradiation part M1 are the same as those of the above-described Condition No. 2 (Comparative Example 1), but a condition of the laser groove processing is different in that the peripheral irradiation part N1 having an annular shape and a low intensity profile with a maximum power of 400 W is provided around the central irradiation part M1. In this Condition No. 3, the energy density Edm of the central irradiation part M1 was 182.0 [J/cm$^2$], and the energy density Edn of the peripheral irradiation part N1 was 34.0 [J/cm$^2$].

In this Condition No. 3, the average groove depth D was 24 μm, which was almost equal to the average groove depth of Condition No. 2 of 25 μm. In addition, the iron loss before pressurization was also about the same as that of Condition No. 2. However, in this Condition No. 3, since the upheavals 101 did not occur around the groove U, the iron loss after pressurization was also maintained at a low value and did not increase. Therefore, it was confirmed that the building factor was excellent.

In Condition No. 4 (Comparative Example 2), the power of the central irradiation part M1 and the peripheral irradiation part N1 was lowered to proportionally lower the energy density, and the other conditions are the same as those of Condition NO. 3. Since the energy density Edn of the peripheral irradiation part N1 was a certain value or more, it was confirmed that no upheaval was formed, and there was no increase in iron loss after pressurization. However, since the energy density Edm of the central irradiation part M1 was greatly reduced, the average groove depth D was 8 μm, which was less than 10 μm, and the reduction in iron loss was also small.

In Condition No. 5 (Comparative Example 3), the laser power of the central irradiation part M1 was increased to increase the energy density Edm. Other conditions were the same as those in Condition No. 3. In Condition No. 5, since the average groove depth D was 60 μm, which was more than 50 μm, it was confirmed that the decrease in iron loss was small, and the large upheavals 101 were generated around the groove. It was presumed that this was because a large amount of a molten material was generated in the central irradiation part M1, and the evaporation pressure of the metal increased. In such a state, since a large amount of a molten metal is pushed out also on the T direction side intersecting the laser scanning direction S and in the laser scanning direction S, even heating by the peripheral irradiation part N1 is not able to minimize upheavals. Therefore, the large upheavals 101 were generated. As a result, the iron loss reduction effect was reduced. In addition, an increase in iron loss during pressurization was also remarkable due to the upheavals 101, and it has also been found that there is a problem in terms of the building factor.

In Condition No. 6 (Comparative Example 4), the power of the peripheral irradiation part N1 was lowered to lower the energy density Edn to 0.8 [J/cm$^2$], which was less than 1.0 [J/cm$^2$]. Other conditions were the same as those in the example of Condition No. 3. In this case, since an appropriate average groove depth D can be obtained by the central irradiation part M1, a low iron loss can be obtained. However, it has been confirmed that since the upheaval minimization effect by the peripheral irradiation part N1 was small, the upheavals 101 were generated, and the iron loss after pressurization increased. That is, it has been found that there is a problem in terms of the building factor.

In Condition No. 7 (Comparative Example 5), the power of the peripheral irradiation part N1 was increased to increase the energy density Edn to 59.4 [J/cm$^2$], which was more than 50.0 [J/cm$^2$]. Other conditions were the same as those in the example of Condition No. 3. In this case, since an appropriate average groove depth D can be obtained by the central irradiation part M1, a low iron loss can be obtained. However, melting by the peripheral irradiation part N1 was excessive, and the upheavals 101 were formed around the groove. As a result, it was confirmed that the iron loss after pressurization increased. That is, it has been found that there is a problem in terms of the building factor.

In Condition No. 8 (Invention Example 2), the power of both the central irradiation part M1 and the peripheral irradiation part N1 was reduced, the energy density Edm of the central irradiation part M1 was set to 49.1 [J/cm$^2$], which was slightly lower than 50 [J/cm$^2$], and the energy density of the peripheral irradiation part was set to 1.0 [J/cm$^2$]. Other conditions were the same as those in the invention example 1 of Condition No. 3. In this Condition No. 8 (Invention Example 2), although the energy density Edm of the central irradiation part M1 was small, an average groove depth D of 10 $\mu$m was obtained, so that a relatively low iron loss was obtained. In addition, since no upheaval 101 was generated around the groove U, the iron loss after pressurization was also maintained at a low value and did not increase. Therefore, it was confirmed that the building factor was excellent.

In Condition No. 9 (Invention Example 3), the power of both the central irradiation part M1 and the peripheral irradiation part N1 was increased, the energy density Edm of the central irradiation part M1 was set to 1000.9 [J/cm$^2$], which was slightly higher than 1000 [J/cm$^2$], and the energy density Edn of the peripheral irradiation part N1 was set to 51.0 [J/cm$^2$], which was slightly higher than 50 [J/cm$^2$]. Other conditions were the same as those in the invention example 1 of Condition No. 3. In this Condition No. 9 (Invention Example 3), since the energy density Edm of the central irradiation part M1 was large, an average groove depth D of 49 $\mu$m was obtained, so that a low iron loss was obtained. In addition, although the molten metal is likely to be generated in a case where a relatively deep groove is formed, no upheaval 101 was generated around the groove U because the energy density Edn of the peripheral irradiation part N1 was also increased. Therefore, the iron loss after pressurization was also maintained at a low value and did not increase. Therefore, it was confirmed that the building factor was excellent.

In Condition No. 10 (Invention Example 4), the power of the peripheral irradiation part N1 was increased as compared to Condition No. 6 (Comparative Example 4), and the energy density Edn of the peripheral irradiation part N1 was set to 1.0 [J/cm$^2$]. Other conditions were the same as those in Condition No. 6. In this Condition No. 10 (Invention Example 4), the groove depth was 25 $\mu$m, which was equal to that in Condition No. 6, and a low iron loss was obtained. In addition, no upheaval 101 was generated around the groove U due to an increase in the energy density Edn of the peripheral irradiation part N1, and the iron loss after pressurization was also maintained at a low value and did not increase. Therefore, it was confirmed that the building factor was excellent.

In Condition No. 11 (Invention Example 5), the power of the peripheral irradiation part N1 was further increased as compared to Condition No. 6 (Comparative Example 4), and the energy density Edn of the peripheral irradiation part N1 was set to 51.0 [J/cm$^2$]. Other conditions were the same as those in the example of Condition No. 6. In this Condition No. 11 (Invention Example 5), the groove depth was 27 $\mu$m, which was equal to or more than that in Condition No. 6, and a low iron loss was obtained. In addition, no upheaval 101 was generated around the groove U due to the energy density Edn of the peripheral irradiation part N1, and the iron loss after pressurization was also maintained at a low value and did not increase. Therefore, it was confirmed that the building factor was excellent.

With the above-described verification test, according to the groove processing method and the groove processing apparatus of the above-described embodiment, in the scanning processing with the laser beam LB, it has been confirmed that by appropriately setting the energy density Edm of the central irradiation part M1 and the energy density Edn of the peripheral irradiation part N1, the groove U having an appropriate depth for reducing the iron loss can be formed, and the generation of the upheavals 101 raised from the sheet surface around the groove can be minimized, and as a result, the grain-oriented electrical steel sheet 100 particularly excellent in the building factor can be obtained.

Next, an example in a case where the groove processing intervals are non-regular intervals will be described, but before that, the groove intervals will be described first.

As described above, it has been known that a magnetic domain is refined by forming grooves on the grain-oriented electrical steel sheet, iron loss is reduced while a magnetic flux density generated at a constant magnetizing force is reduced. In a case where the grain-oriented electrical steel sheet is used for an iron core of a transformer, there is an advantage that the transformer can be downsized as the magnetic flux density that can be generated is larger. Therefore, it is desirable to reduce the iron loss and maintain the magnetic flux density at a high level.

The magnetic flux density is correlated with a groove formation interval, and the reduction in the magnetic flux density is smaller when the distance between the intervals of the grooves is as wide as possible. On the other hand, when the distance between the intervals of the grooves is too wide, the effect of reducing iron loss also decreases. In order to effectively perform magnetic domain control by groove formation, a portion having a wide magnetic domain width is selected to form grooves and refine the magnetic domain. In contrast, a sufficient reduction effect of iron loss can be obtained even when a groove is not formed in a portion where the original magnetic domain width is narrow, or the groove intervals are widened.

The magnetic domain width can be measured using a magneto-optical sensor. The magneto-optical sensor is a sensor that irradiates a steel sheet with polarized laser beam and rotates the polarized laser beam in a self-magnetization direction of the sheet surface when the light is reflected. That is, since the polarized laser beam rotates depending on the magnetization direction of the magnetic domain, the transmittance of a polarizing plate provided on a light receiving element changes, and the distribution of the magnetic domain appears as light and dark on a light receiving surface of the sensor. The magnetic domain width can be specified by image analysis of the width of the light and dark.

Using the above-described principle, a portion having a wide magnetic domain width and a portion having a narrow magnetic domain width were specified, and a case of performing processing in which the groove formation interval was changed in correlation with the magnetic domain width was verified. Here, a steel sheet was prepared, the steel sheet including a region having a magnetic domain width of 500 $\mu$m or more in which a groove formation interval PL was set to 2 mm, a region having a magnetic domain width of less than 500 $\mu$m and 200 $\mu$m or more in which the groove formation interval PL was set to 5 mm, a region having a magnetic domain width of less than 200 $\mu$m and 50 $\mu$m or more in which the groove formation interval PL was set to 10 mm, and a region having a magnetic domain width of less than 50 $\mu$m in which no groove was formed. As a result, the groove formation interval PL was not constant and varied depending on the location, with a minimum of 2 mm and a maximum of 30 mm. The results of evaluating the magnetic characteristics of this steel sheet are shown in Table 2 in comparison with other Examples.

[Table 2]

| Condition No. | Type | Groove interval | Irradiation interval | Maximum power of central irradiation part | Iron loss | Iron loss during pressurization | Magnetic flux density |
|---|---|---|---|---|---|---|---|
| | | | PL | Pm | $W_{17/50}$ | $W_{17/50}$ | B8 |
| | | | mm | W | W/kg | W/kg | T |
| 1 | Reference | Reference (without groove processing) | - | - | 0.85 | 0.85 | 1.920 |
| 3 | Invention Example 1 | Regular | 3 | 1000 | 0.71 | 0.71 | 1.907 |
| 12 | Invention Example 6 | Non-regular | 2 to 30 | 1000 | 0.72 | 0.72 | 1.915 |

For the magnetic characteristics, in addition to the iron loss $W_{17/50}$ shown in Table 1B, a magnetic flux density B8 was also measured. The magnetic flux density B8 is a magnetic flux density (Unit: T, Tesla) generated at a magnetizing force of 0.8 A/m.

Condition No. 1 (reference) is the same as that shown in Tables 1A and 1B, and exhibits the magnetic characteristics of the steel sheet in which the groove is not processed.

Condition No. 3 (Invention Example 1) is the same as that shown in Tables 1A and 1B, and includes the groove formation interval PL, which is constant at 3 mm in the rolling direction.

Condition number 12 (Invention Example 6) includes a result in which the grooves are formed under the same ring mode laser condition as Condition No. 3 (Invention Example 1), but the grooves are formed at non-regular intervals in accordance with the magnetic domain width described above. In this Condition No. 12 (Invention Example 6), iron loss characteristics equivalent to those of Condition No. 3 (Invention Example 1) are obtained. However, since a region where the groove formation interval PL is wide is included, the effect that the decrease in the magnetic flux density is small was confirmed.

Note that, in the present example, the magnetic domain width is measured by the magneto-optical sensor to change the groove width, but the present invention is not limited to this changing method. As another example, the iron loss value and the magnetic flux density may be measured, and the groove formation interval PL may be appropriately changed according to the measured value to set the non-regular intervals. That is, the condition for making the groove formation interval PL constant or non-constant is not limited to a specific condition.

INDUSTRIAL APPLICABILITY

According to the above-described embodiments of the present invention and various modification examples, it is possible to provide the groove processing method, the groove processing apparatus, and the grain-oriented electrical steel sheet, which enable the reduction of iron loss, without forming an upheaval around a groove, as compared to the related art. Therefore, industrial applicability is significant.

REFERENCE SIGNS LIST

1 Groove processing apparatus
3 Laser irradiation device
LB, LB2, LB3, LB4, LB6 Laser beam
M1, M2, M3, M4 Central irradiation part
N1, N2, N3, N4 Peripheral irradiation part
U Groove
U1 Deep groove portion
U2 Groove edge portion

**Claims**

1. A groove processing method for forming a groove on a grain-oriented electrical steel sheet, the method comprising:

   a groove processing step of performing scanning with a laser beam to form a groove having a linear shape and a maximum depth of 10 [$\mu$m] or more and 50 [$\mu$m] or less and extending in a scanning direction serving as a direction parallel to a width direction of the grain-oriented electrical steel sheet perpendicular to a rolling direction or a direction inclined at a predetermined angle with respect to the width direction, the grooves being formed at regular intervals in the rolling direction of the grain-oriented electrical steel sheet, wherein
   the laser beam includes a central irradiation part serving as a region including a center of an optical path of the laser beam where the laser beam is emitted, and a peripheral irradiation part serving as a region surrounding the central irradiation part where the laser beam is emitted, and
   an energy density [J/cm$^2$] of the central irradiation part is set higher than an energy density [J/cm$^2$] of the peripheral irradiation part.

2. The groove processing method according to Claim 1, wherein
   by the peripheral irradiation part, a following position with respect to the central irradiation part along the scanning direction and at least one of positions on both sides of the groove along a direction perpendicular to the scanning direction are heated to minimize solidification of a molten material as an upheaval generated when the groove is formed on the grain-oriented electrical steel sheet by the central irradiation part.

3. The groove processing method according to Claim 1, wherein by the peripheral irradiation part, a leading position with respect to the central irradiation part along the scanning direction is heated, and a surface of the grain-oriented electrical steel sheet is preheated before being heated by the central irradiation part.

4. The groove processing method according to Claim 1, wherein a beam intensity profile of the peripheral irradiation part as viewed in the scanning direction follows a Gaussian like distribution or a flat-top distribution.

5. The groove processing method according to Claim 1, wherein a focused shape of the peripheral irradiation part is an annular shape surrounding the central irradiation part on a surface of the grain-oriented electrical steel sheet.

6. The groove processing method according to Claim 1, wherein a focused shape of the central irradiation part is an elliptical shape having a major axis in the scanning direction on a surface of the grain-oriented electrical steel sheet.

7. The groove processing method according to Claim 1, wherein

   the energy density of the central irradiation part is 50 [J/cm$^2$] or more and 1000 [J/cm$^2$] or less, and

the energy density of the peripheral irradiation part is 1 [J/cm$^2$] or more and less than 50 [J/cm$^2$].

8. A groove processing apparatus configured to form a groove on a grain-oriented electrical steel sheet, wherein

the groove processing apparatus performs scanning with a laser beam to form a groove having a linear shape and a maximum depth of 10 [μm] or more and 50 [μm] or less and extending in a scanning direction serving as a direction parallel to a width direction of the grain-oriented electrical steel sheet perpendicular to a rolling direction or a direction inclined at a predetermined angle with respect to the width direction, the grooves being formed at regular intervals in the rolling direction of the grain-oriented electrical steel sheet,
the laser beam includes a central irradiation part serving as a region including a center of an optical path of the laser beam where the laser beam is emitted, and a peripheral irradiation part serving as a region surrounding the central irradiation part where the laser beam is emitted, and
an energy density [J/cm$^2$] of the central irradiation part is set higher than an energy density [J/cm$^2$] of the peripheral irradiation part.

9. A grain-oriented electrical steel sheet, wherein

a groove having a linear shape and a maximum depth of 10 [μm] or more and 50 [μm] or less and extending in a direction parallel to a width direction perpendicular to a rolling direction or a direction inclined at a predetermined angle with respect to the width direction is formed, the grooves being formed at regular intervals in the rolling direction, and
the groove has a multistage shape including a deep groove portion with a deepest point and a groove edge portion with a gradient gentler than a gradient of a wall surface of the deep groove portion as viewed in the direction in which the groove extends.

10. A groove processing method for forming a groove on a grain-oriented electrical steel sheet, the method comprising:

a groove processing step of performing scanning with a laser beam to form a groove having a linear shape and a maximum depth of 10 [μm] or more and 50 [μm] or less and extending in a scanning direction serving as a direction parallel to a width direction of the grain-oriented electrical steel sheet perpendicular to a rolling direction or a direction inclined at a predetermined angle with respect to the width direction, the grooves being formed at non-regular intervals in the rolling direction of the grain-oriented electrical steel sheet, wherein
the laser beam includes a central irradiation part serving as a region including a center of an optical path of the laser beam where the laser beam is emitted, and a peripheral irradiation part serving as a region surrounding the central irradiation part where the laser beam is emitted, and
an energy density [J/cm$^2$] of the central irradiation part is set higher than an energy density [J/cm$^2$] of the peripheral irradiation part.

11. The groove processing method according to Claim 10, wherein
by the peripheral irradiation part, a following position with respect to the central irradiation part along the scanning direction and at least one of positions on both sides of the groove along a direction perpendicular to the scanning direction are heated to minimize solidification of a molten material as an upheaval generated when the groove is formed on the grain-oriented electrical steel sheet by the central irradiation part.

12. The groove processing method according to Claim 10, wherein by the peripheral irradiation part, a leading position with respect to the central irradiation part along the scanning direction is heated, and a surface of the grain-oriented electrical steel sheet is preheated before being heated by the central irradiation part.

13. The groove processing method according to Claim 10, wherein a beam intensity profile of the peripheral irradiation part as viewed in the scanning direction follows a Gaussian like distribution or a flat-top distribution.

14. The groove processing method according to Claim 10, wherein a focused shape of the peripheral irradiation part is an annular shape surrounding the central irradiation part on a surface of the grain-oriented electrical steel sheet.

15. The groove processing method according to Claim 10, wherein a focused shape of the central irradiation part is an elliptical shape having a major axis in the scanning direction on a surface of the grain-oriented electrical steel sheet.

16. The groove processing method according to Claim 10, wherein

the energy density of the central irradiation part is 50 [J/cm$^2$] or more and 1000 [J/cm$^2$] or less, and
the energy density of the peripheral irradiation part is 1 [J/cm$^2$] or more and less than 50 [J/cm$^2$].

17. A groove processing apparatus configured to form a groove on a grain-oriented electrical steel sheet, wherein

the groove processing apparatus performs scanning with a laser beam to form a groove having a linear shape and a maximum depth of 10 [μm] or more and 50 [μm] or less and extending in a scanning direction serving as a direction parallel to a width direction of the grain-oriented electrical steel sheet perpendicular to a rolling direction or a direction inclined at a predetermined angle with respect to the width direction, the grooves being formed at non-regular intervals in the rolling direction of the grain-oriented electrical steel sheet,
the laser beam includes a central irradiation part serving as a region including a center of an optical path of the laser beam where the laser beam is emitted, and a peripheral irradiation part serving as a region surrounding the central irradiation part where the laser beam is emitted, and
an energy density [J/cm$^2$] of the central irradiation part is set higher than an energy density [J/cm$^2$] of the peripheral irradiation part.

18. A grain-oriented electrical steel sheet, wherein

a groove having a linear shape and a maximum depth of 10 [μm] or more and 50 [μm] or less and extending in a direction parallel to a width direction perpendicular to a rolling direction or a direction inclined at a predetermined angle with respect to the width direction is formed, the grooves being formed at non-regular intervals in the rolling direction, and
the groove has a multistage shape including a deep groove portion with a deepest point and a groove edge portion with a gradient gentler than a gradient of a wall surface of the deep groove portion as viewed in the direction in which the groove extends.

# FIG. 1

ROLLING DIRECTION

FIG. 2

# FIG. 3

(3A)

(3B)

(3C)

(3D)

# FIG. 4

(4A)

(4B)

(4C)

(4D)

# FIG. 5

EP 4 667 594 A1

# FIG. 6

# FIG. 7

FIG. 8

(8A)

(8B)

(8C)

# FIG. 9

(9A)

(9B)

(9C)

# FIG. 10

(10A)

(10B)

(10C)

# FIG. 11

(11A)

(11B)

(11C)

EP 4 667 594 A1

# FIG. 12

(12A)

(12B)

(12C)

EP 4 667 594 A1

# FIG. 13

PL

100

ROLLING
DIRECTION

U

# FIG. 14

320mm

320mm

200

100

## INTERNATIONAL SEARCH REPORT

| International application No. |
|---|
| **PCT/JP2024/005171** |

**A. CLASSIFICATION OF SUBJECT MATTER**

***C21D 8/12***(2006.01)i; ***B23K 26/364***(2014.01)i
FI: C21D8/12 D; B23K26/364

According to International Patent Classification (IPC) or to both national classification and IPC

**B. FIELDS SEARCHED**

Minimum documentation searched (classification system followed by classification symbols)

C21D8/12; B23K26/364

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2018-508645 A (POSCO) 29 March 2018 (2018-03-29) claims, paragraphs [0001]-[0015], [0052]-[0095], fig. 1-2 | 1-3, 5-9 |
| Y | | 10-12, 14-18 |
| A | | 4, 13 |
| Y | JP 11-124629 A (KAWASAKI STEEL CORP.) 11 May 1999 (1999-05-11) claims, paragraphs [0001]-[0008], [0037] | 10-12, 14-18 |
| A | | 1-9, 13 |
| A | WO 2022/045264 A1 (JFE STEEL CORP.) 03 March 2022 (2022-03-03) entire text | 1-18 |
| A | KR 10-2013-0128731 A (POSCO) 27 November 2013 (2013-11-27) entire text, all drawings | 1-18 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 May 2024** | **21 May 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2024/005171**

| Patent document cited in search report | | | Publication date (day/month/year) | Patent family member(s) | | | Publication date (day/month/year) |
|---|---|---|---|---|---|---|---|
| JP | 2018-508645 | A | 29 March 2018 | US | 2017/0369960 | A1 | |
| | | | | claims, paragraphs [0001]-[0015], [0055]-[0099], fig. 1-2 | | | |
| | | | | WO | 2016/105055 | A1 | |
| | | | | EP | 3239325 | A1 | |
| | | | | KR | 10-2016-0078242 | A | |
| | | | | CN | 107109512 | A | |
| | | | | PL | 3239325 | T3 | |
| JP | 11-124629 | A | 11 May 1999 | (Family: none) | | | |
| WO | 2022/045264 | A1 | 03 March 2022 | US | 2023/0307160 | A1 | |
| | | | | entire text | | | |
| | | | | EP | 4206339 | A1 | |
| | | | | CN | 115917020 | A | |
| | | | | KR | 10-2023-0038271 | A | |
| KR | 10-2013-0128731 | A | 27 November 2013 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023022958 A
- WO 2022045265 A
- JP 5234222 B
- JP 6826606 B